# EUROPEAN PATENT APPLICATION

(11) **EP 4 641 465 A1**
(43) Date of publication of application: **29.10.2025**
(21) Application number: 23939222.8
(22) Date of filing: 07.10.2023
(51) Int. Cl.: G06Q 20/38, G06F 21/64

(54) **DATA PROCESSING METHOD AND APPARATUS BASED ON BLOCKCHAIN, AND DEVICE AND MEDIUM**

(30) Priority: 30.05.2023 CN 202310631214
(71) Applicant: Tencent Technology (Shenzhen) Company Limited, Shenzhen, Guangdong 518057 (CN)
(72) Inventor: ZHU, Gengliang, Shenzhen, Guangdong 518057 (CN)
(74) Representative: Nederlandsch Octrooibureau
(86) International application number: PCT/CN2023/123156
(87) International publication number: WO 2024/244249

(57) **Abstract**

A data processing method based on a blockchain. The method, which is executed by means of a computer device that maintains a consensus node on a second blockchain, comprises: acquiring a cross-chain message submitted by means of a forwarding service device, and acquiring a blockchain identifier carried in the cross-chain message, wherein the cross-chain message is associated with cross-chain transaction data stored in a first blockchain (S101); acquiring, from a second blockchain corresponding to the blockchain identifier, block Merkle information corresponding to the first blockchain, and acquiring, from a block Merkle tree represented by the block Merkle information, a Merkle proof set corresponding to the cross-chain message, wherein the Merkle proof set includes node information of some nodes in the block Merkle tree, and the verifiable height of the block Merkle information in the first blockchain is greater than or equal to the block height of a block where the cross-chain transaction data indicated by the cross-chain message is located in the first blockchain (S102); performing validity verification on the cross-chain message according to the Merkle proof set and the block Merkle information, so as to obtain a cross-chain verification result corresponding to the cross-chain message (S103); and if the cross-chain verification result indicates that the verification is successful, acquiring a transaction execution result corresponding to the cross-chain message, and storing the transaction execution result in the second blockchain (S104).

## Description

### RELATED APPLICATION

This application claims priority to Chinese Patent Application No. 2023106312148, entitled "BLOCKCHAIN-BASED DATA PROCESSING METHOD AND APPARATUS, DEVICE, AND MEDIUM" and filed on May 30, 2023, which is incorporated herein by reference in its entirety.

### FIELD OF THE TECHNOLOGY

This application relates to the field of blockchain technologies, and in particular, to a blockchain-based data processing method and apparatus, a device, and a medium.

### BACKGROUND OF THE DISCLOSURE

A blockchain is a decentralized distributed ledger system, and has features of data immutability, decentralization, and openness. As a core of blockchain technologies, a consensus mechanism is a basis for ensuring normal operation of a blockchain system. A consensus process of the blockchain system may be understood as a process of making distributed ledgers of blockchain nodes consistent. With development and application of the blockchain technologies, cross-chain services performed between different blockchains are increasingly widely applied. For example, asset transfer is performed between different blockchains, or asset hosting and authorization is performed between different blockchains. In an application scenario of the cross-chain service, to ensure security of data in different blockchains, the cross-chain service needs to be verified.

Currently, in a verification process of the cross-chain service, a node on each blockchain needs to maintain a large amount of data (block headers of all blocks on the blockchain and the like) on another one or more blockchains, and verifies a structure of the blockchain. When a data volume on the blockchain is increased, a data storage occupation amount of the node on the blockchain is excessively large, and verification efficiency of the cross-chain service is excessively low.

### SUMMARY

Based on various embodiments of this application, a blockchain-based data processing method and apparatus, a device, and a medium are provided.

An aspect of an embodiment of this application provides a blockchain-based data processing method, performed by a computer device maintaining a consensus node on a second blockchain, and including:
obtaining a cross-chain message submitted by a forwarding service device, and obtaining a blockchain identifier carried in the cross-chain message, the cross-chain message being associated with cross-chain transaction data stored in a first blockchain;
obtaining, in the second blockchain corresponding to the blockchain identifier, block Merkle information corresponding to the first blockchain, and obtaining, in a block Merkle tree represented by the block Merkle information, a Merkle proof set corresponding to the cross-chain message, the Merkle proof set including node information of a part of nodes in the block Merkle tree, and a verifiable height of the first blockchain indicated by the block Merkle information being greater than or equal to a block height of a block in which the cross-chain transaction data indicated by the cross-chain message is located in the first blockchain;
performing validity verification on the cross-chain message according to the Merkle proof set and the block Merkle information, to obtain a cross-chain verification result of the cross-chain message; and
obtaining a transaction execution result corresponding to the cross-chain message if the cross-chain verification result indicates that verification succeeds, and storing the transaction execution result into the second blockchain.

An aspect of an embodiment of this application provides a blockchain-based data processing method, performed by a forwarding service device, and including:
obtaining a cross-chain message triggered by a first blockchain, and obtaining a block height of a block in which cross-chain transaction data indicated by the cross-chain message is located in the first blockchain, the cross-chain message carrying a blockchain identifier corresponding to a second blockchain; and
if detecting, in the second blockchain corresponding to the blockchain identifier, that a verifiable height corresponding to the first blockchain is greater than or equal to the block height of the block in which the cross-chain transaction data is located in the first blockchain, forwarding the cross-chain message to a consensus node of the second blockchain, to enable the consensus node of the second blockchain to perform validity verification on the cross-chain message according to a Merkle proof set corresponding to the cross-chain message and block Merkle information indicating the verifiable height of the first blockchain, to obtain a cross-chain verification result of the cross-chain message,
the block Merkle information being stored in the second blockchain, the Merkle proof set being obtained in a block Merkle tree represented by the block Merkle information, and the consensus node of the second blockchain being configured to store, when the cross-chain verification result indicates that verification succeeds, a transaction execution result corresponding to the cross-chain message into the second blockchain.

An aspect of an embodiment of this application provides a blockchain-based data processing apparatus, including:
a cross-chain message obtaining unit, configured to obtain a cross-chain message submitted by a forwarding service device, and obtain a blockchain identifier carried in the cross-chain message, the cross-chain message being associated with cross-chain transaction data stored in a first blockchain;
a proof set obtaining unit, configured to obtain, in the second blockchain corresponding to the blockchain identifier, block Merkle information corresponding to the first blockchain, and obtain, in a block Merkle tree represented by the block Merkle information, a Merkle proof set corresponding to the cross-chain message, the Merkle proof set including node information of a part of nodes in the block Merkle tree, and a verifiable height of the first blockchain indicated by the block Merkle information being greater than or equal to a block height of a block in which the cross-chain transaction data indicated by the cross-chain message is located in the first blockchain;
a cross-chain message verification unit, configured to perform validity verification on the cross-chain message according to the Merkle proof set and the block Merkle information, to obtain a cross-chain verification result of the cross-chain message; and
a cross-chain message execution unit, configured to obtain a transaction execution result corresponding to the cross-chain message if the cross-chain verification result indicates that verification succeeds, and store the transaction execution result into the second blockchain.

An aspect of an embodiment of this application provides a blockchain-based data processing apparatus, including:
a block height obtaining unit, configured to obtain a cross-chain message triggered by a first blockchain, and obtain a block height of a block in which cross-chain transaction data indicated by the cross-chain message is located in the first blockchain, the cross-chain message carrying a blockchain identifier corresponding to a second blockchain; and
a cross-chain message forwarding unit, configured to: if detecting, in the second blockchain corresponding to the blockchain identifier, that a verifiable height corresponding to the first blockchain is greater than or equal to the block height of the block in which the cross-chain transaction data is located in the first blockchain, forward the cross-chain message to a consensus node of the second blockchain, to enable the consensus node of the second blockchain to perform validity verification on the cross-chain message according to a Merkle proof set corresponding to the cross-chain message and block Merkle information indicating the verifiable height of the first blockchain, to obtain a cross-chain verification result of the cross-chain message,
the block Merkle information being stored in the second blockchain, the Merkle proof set being obtained in a block Merkle tree represented by the block Merkle information, and the consensus node of the second blockchain being configured to store, when the cross-chain verification result indicates that verification succeeds, a transaction execution result corresponding to the cross-chain message into the second blockchain.

An aspect of an embodiment of this application provides a computer device, including a memory and a processor, the memory being connected to the processor, the memory being configured to store computer-readable instructions, and the processor being configured to invoke the computer-readable instructions, to enable the computer device to perform the method according to any one of the foregoing aspects in the embodiments of this application.

An aspect of an embodiment of this application provides a computer-readable storage medium, the computer-readable storage medium storing computer-readable instructions, the computer-readable instructions being applicable to be loaded and executed by a processor, to enable a computer device having the processor to perform the method according to any one of the foregoing aspects in the embodiments of this application.

According to an aspect of this application, a computer program product is provided. The computer program product includes computer-readable instructions, and the computer-readable instructions are stored in a computer-readable storage medium. A processor of a computer device reads the computer-readable instructions from the computer-readable storage medium, and executes the computer-readable instructions, to enable the computer device to perform the method according to any one of the foregoing aspects.

Details of one or more embodiments of this application are provided in the subsequent accompanying drawings and descriptions. Other features, objectives, and advantages of this application become apparent from the specification, the accompanying drawings, and the claims.

### BRIEF DESCRIPTION OF THE DRAWINGS

To describe the technical solutions in embodiments of this application more clearly, the following briefly describes the accompanying drawings required for describing the embodiments or the related art. Apparently, the accompanying drawings in the following descriptions show merely some embodiments of this application, and a person of ordinary skill in the art may still derive other drawings from these disclosed accompanying drawings without creative efforts.
FIG. 1 is a schematic diagram of a hierarchical structure of a blockchain network according to an embodiment of this application.
FIG. 2 is a schematic diagram of a multi-chain structure of a blockchain network according to an embodiment of this application.
FIG. 3 is a schematic flowchart of a blockchain-based data processing method according to an embodiment of this application.
FIG. 4 is a schematic diagram of creating a block Merkle tree according to an embodiment of this application.
FIG. 5 is a schematic diagram of a block structure according to an embodiment of this application.
FIG. 6 is a schematic diagram of a time sequence of a blockchain-based data processing method according to an embodiment of this application.
FIG. 7 is a schematic diagram of block data verification based on a Merkle mountain range according to an embodiment of this application.
FIG. 8 is a schematic diagram of a verification process of a cross-chain message according to an embodiment of this application.
FIG. 9 is a schematic diagram of an overall structure of a cross-chain technology between different blockchains according to an embodiment of this application.
FIG. 10 is a schematic diagram of a structure of a trusted prediction device according to an embodiment of this application.
FIG. 11 is a system architecture diagram of a tax blockchain system according to an embodiment of this application.
FIG. 12 is a schematic diagram 1 of a structure of a blockchain-based data processing apparatus according to an embodiment of this application.
FIG. 13 is a schematic diagram 2 of a structure of a blockchain-based data processing apparatus according to an embodiment of this application.
FIG. 14 is a schematic diagram of a structure of a computer device according to an embodiment of this application.

### DESCRIPTION OF EMBODIMENTS

The technical solutions in embodiments of this application are clearly and completely described in the following with reference to the accompanying drawings in embodiments of this application. Apparently, the described embodiments are merely some rather than all of embodiments of this application. All other embodiments obtained by a person of ordinary skill in the art based on the embodiments of this application without creative efforts shall fall within the protection scope of this application.

For ease of understanding, the following first describes the basic technologies involved in the embodiments of this application.

A blockchain is a set of decentralized infrastructure with distributed storage features. Specifically, the blockchain is a data structure including data blocks in a chronological order in a manner similar to a linked list, which can safely store sequential data that can be verified in a system, and cryptographically ensure that the data is traceable, undeniable, tamper-proof, unforgeable, and decentralized. The blockchain may usually include content such as a consensus, a transaction block, status data storage, and cryptographic identity security. A blockchain bottom-layer platform may include modules such as a basic service module, a smart contract module, and an operation management module.

The basic service module is deployed on all blockchain nodes, to verify validity of a service request, and stores the service request after a consensus on a valid request is reached. For a new service request, the basic service module first performs interface adaptation analysis and authentication (namely, interface adaptation) on the service request, then encrypts, through a consensus algorithm, service information indicated by the service request (consensus management), completely and consistently transmits the service information to a shared ledger after encryption (network communication), and stores the service information. The smart contract module is responsible for contract registration and issuance as well as contract triggering and contract execution. A developer may define a contract logic through a programming language, release the programming language on a blockchain (contract registration), and invoke, according to a logic of contract terms, a private key or other events to trigger the execution to complete the contract logic, and further provide a function of upgrading and canceling the contract. The operation management module is mainly responsible for deployment, configuration modification, contract configuration, cloud adaptation, and visual output of real-time status during product operation in a product release process, such as alarms, management of network conditions, or management of a health status of a node device. This embodiment of this application may relate to cross-chain transaction processing between different blockchains (for example, a first blockchain and a second blockchain). Different blockchains may be responsible for different service types. Interaction and communication among a plurality of blockchains are completed by using a cross-chain technology based on a Merkle mountain range (MMR, also referred to as range Merkle proof).

A smart contract is a computer protocol intended to disseminate, verify, or execute a contract in an informatization manner. The smart contract may be understood as computer-readable instructions running on the blockchain. The computer-readable instructions have a preset rule, have a state and a response condition, may be used to encapsulate, verify, and execute complex behaviors of distributed nodes, and are used to complete at least one of functions such as information exchange, value transfer, or asset management. Based on a distributed architecture, a consensus algorithm, and the like of the blockchain, the smart contract allows users who do not trust each other to complete a transaction without requiring any third-party trusted proxy or authority. In addition, the smart contract in a digital form may be flexibly embedded into various tangible or intangible assets, transactions, and data, to implement active or passive asset management and control as well as information management and control, and gradually construct a programmable intelligent asset and system, and the like. Different from an ordinary program, the smart contract can ensure that operation results of all blockchain nodes in a blockchain network are completely the same, so that any blockchain node can verify whether an execution result of the smart contract in a data block is correct. In this embodiment of this application, different smart contracts may be deployed in the blockchain according to a requirement type of a specific application scenario. In other words, the different smart contracts may have different functions. In this embodiment of this application, naming may be performed according to functions possessed by the smart contract. For example, a smart contract configured for managing permission of a lightweight node (simplified payment verification, SPV node) may be referred to as an SPV permission contract, and a smart contract configured for clearing tax general data may be referred to as a general data clearing contract or the like. The different smart contracts may also be distinguished by being described as a first smart contract and a second smart contract. The lightweight node is a credential-based lightweight node. There is no need to download, verify, and store an entire blockchain. Instead, only a small quantity of blocks and some transactions in these blocks need to be downloaded to complete some given tasks, for example, verify a specific transaction. Because only a small quantity of blocks need to be downloaded, the SPV node has few requirements on hardware and bandwidths, making the requirements very feasible and easy to implement.

A peer-to-peer (P2P) network is a point-to-point connection network. Based on a special type of network protocols, network states of network nodes do not need to be maintained by a central node. Each network node may broadcast to and interact with neighboring network nodes, to maintain node states of the entire network or node states of the neighboring network nodes.

Digital certificate: In the public key infrastructure (PKI), a digital certificate is an identity proof of a public key holder. The digital certificate may be issued by an authority, which may be referred to as a certificate authority (CA). Based on the PKI, asymmetric encryption and digital signature for information can be achieved.

Consortium blockchain is a blockchain having an entry permission mechanism, which includes a consensus node and a non-consensus node (for ease of understanding, the non-consensus node in this embodiment of this application may be referred to as a service node). Usually, a smart contract on any blockchain needs to be executed by all consensus nodes, and if execution results are the same, it may be determined that consensuses are reached on the consensus nodes on the blockchain. The service node usually does not execute the smart contract on the blockchain, but may synchronize the execution results of the smart contract from the consensus nodes to the service node.

A child chain (or may be referred to as a branch chain) is a concept relative to a parent chain (or may be referred to as a main chain), and may be simply understood as a blockchain constructed based on an underlying parent chain. The child chain is a representative of various industries or vertical fields of the blockchain, and is a general name for various types of blockchains in various fields. When the child chain is created, related information of the child chain may be recorded in the parent chain. In other words, data added to the child chain needs to be saved, verified, traced, and the like depending on the parent chain.

Transaction is a form of execution performed on the blockchain. The transaction includes a private key signature of an initiating object, and may ensure authenticity, unforgeability, and undeniableness of transaction content.

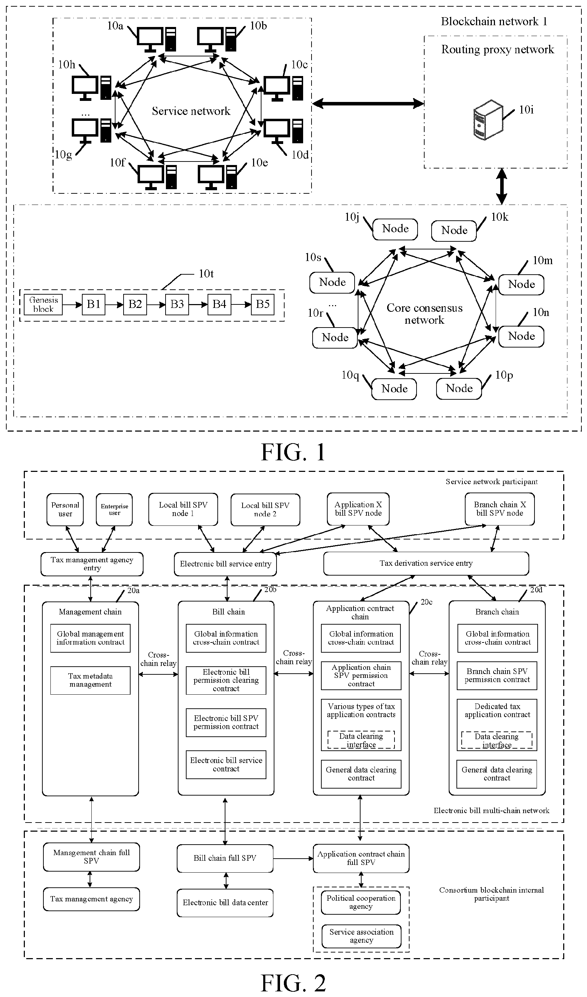

FIG. 1 is a schematic diagram of a hierarchical structure of a blockchain network according to an embodiment of this application. In this embodiment of this application, the hierarchical structure of the blockchain network may be a blockchain network 1 shown in FIG. 1. A complete blockchain service system corresponding to the blockchain network 1 may include a service network (which may also be referred to as a witness network), a core consensus network, and a routing proxy network that are shown in FIG. 1. One or more proxy nodes may be provided in the routing proxy network. This is not limited herein. The proxy node 10i is used as an example in this embodiment of this application. The proxy node 10i may be configured to perform network isolation on the service network and the core consensus network. The proxy node 10i may be an independent physical server, or may be a server cluster including a plurality of physical servers or a distributed system, or may be a cloud server providing a basic cloud computing service. This is not limited herein. The proxy node 10i may perform network layering on a peer to peer (P2P) network to form a hierarchical structure of "service network-core consensus network", thereby improving confidentiality and security of data on a blockchain.

The service network shown in FIG. 1 may include one or more blockchain nodes. A quantity of nodes in the service network is not limited herein. For example, the service network may specifically include a node 10a, a node 10b, a node 10c, a node 10d, a node 10e, a node 10f, a node 10g, a node 10h, and the like. In this embodiment of this application, the blockchain node in the service network may be referred to as a service node. The service node does not need to participate in accounting consensus and is mainly configured to execute a transaction service, to obtain a corresponding service transaction. The service node herein may be a full node including a complete blockchain database, or a lightweight node storing partial data in a blockchain database, which is not limited herein. In order to reduce a waste of storage space of the service node, the service node in this embodiment of this application may be, for example, the SPV node. The service node does not need to store complete transaction data, and instead, obtains, from the core consensus network shown in FIG. 1 through the proxy node 10i, block header data and partially authorized and visible block data (for example, a service transaction associated with the service node).

The core consensus network shown in FIG. 1 may also include one or more blockchain nodes. A quantity of nodes in the core consensus network is not limited herein. For example, the core consensus network may specifically include a node 10j, a node 10k, a node 10m, a node 10n, a node 10p, a node 10q, a node 10r, and a node 10s. In this embodiment of this application, the blockchain nodes in the core consensus network may be referred to as consensus nodes (also referred to as accounting nodes), and these consensus nodes may run a blockchain consensus protocol.

In this embodiment of this application, the proxy node, the service node, and the consensus node may be collectively referred to as blockchain nodes in the blockchain network 1. The blockchain node may be a server connected to the blockchain network 1 or a terminal device connected to the blockchain network 1. A specific form of the blockchain node is not limited herein. For example, the terminal device may include but is not limited to: an electronic device such as a personal computer (PC), a smartphone, a tablet computer, a notebook computer, a palmtop computer, a mobile internet device (MID), a wearable device (such as a smart watch or a smart band), a smart voice interaction device, a smart home appliance (such as a smart television), a vehicle-mounted device, or an aircraft. The server may be an independent physical server, or may be a server cluster or a distributed system formed by a plurality of physical servers, or may be a cloud server that provides a basic cloud computing service such as a cloud service, a cloud database, cloud computing, a cloud function, cloud storage, a network service, cloud communication, a middleware service, a domain name service, a security service, a content delivery network (CDN), big data, and an artificial intelligence platform. The service network and the core consensus network shown in FIG. 1 may be in different network environments. For example, the service node may be deployed in the service network in a public network, while the consensus node running the blockchain consensus protocol is deployed in a private core consensus network, both of which may interact through a routing boundary.

As shown in FIG. 1, the core consensus network may include a blockchain 10t. The blockchain 10t may include a genesis block, a block B1, a block B2, a block B3, a block B4, a block B5, and the like. Consensus permission may be set on the blockchain 10t. When the node 10j in the core consensus network has the consensus permission on the blockchain 10t, it indicates that the node 10j may perform an independent consensus on the blockchain 10t, that is, may participate in a consensus process of a block included in the blockchain 10t. The consensus nodes having the consensus permission on the blockchain 10t in the core consensus network may form a blockchain independent consensus network. The blockchain independent consensus network may include all or some of the consensus nodes in the core consensus network. A quantity of consensus nodes in the blockchain independent consensus network is not limited herein. For example, if the blockchain network 1 shown in FIG. 1 is a tax blockchain system applied to a tax service, a consensus node performing an independent consensus on the blockchain 10t may be a terminal device used by a tax management agency (for example, a general tax administration or a local tax administration) in the tax blockchain system, and the consensus node may be configured to submit service transaction data in the tax service to the blockchain 10t. The tax service herein may specifically include different types of transaction services such as a bill service, a credit service, an import and export service, an enterprise qualification service, and a refund service. In a compound environment of transaction services of a plurality of types, in this embodiment of this application, a double-layer structure of the blockchain network shown in FIG. 1 may be extended to a multi-chain structure. Different blockchains may be responsible for different service directions, and the different blockchains may interact and communicate with each other through a cross-chain technology based on the MMR.

In other words, in addition to the blockchain 10t shown in FIG. 1, the blockchains included in the core consensus network may further include blockchains respectively corresponding to transaction services of various types. The blockchain 10t and the blockchains corresponding to the transaction services of various types may be mutually independent blockchains in the core consensus network. Alternatively, the transaction services of various types may be transaction services derived from the blockchain 10t in the core consensus network. That is, the blockchains respectively corresponding to the transaction services of various types may be branch chains (child chains) of the blockchain 10t. In this case, the blockchain 10t may be referred to as a main chain (a parent chain). A relationship between the blockchains included in the core consensus network is not limited in this embodiment of this application.

In one embodiment, if each of the plurality of blockchains in the core consensus network is an independent blockchain, a consensus node having consensus permission on each blockchain in the core consensus network may submit the service transaction data to the corresponding blockchain. For example, the core consensus network includes two blockchains (for ease of understanding, the two blockchains herein may be denoted as a blockchain A and a blockchain B) independent of each other. All consensus nodes having the consensus permission on the blockchain A may form a blockchain A independent consensus network, and all consensus nodes having the consensus permission on the blockchain B may form a blockchain B independent consensus network. The blockchain A independent consensus network and the blockchain B independent consensus network may include the same consensus node or different consensus nodes. This is not limited in this application. For example, if the blockchain A is a blockchain corresponding to the bill service, a consensus node in the blockchain A independent consensus network may be configured to add service transaction data in the bill service to the blockchain A. If the blockchain B is a blockchain corresponding to the import and export service, a consensus node in the blockchain B independent consensus network may be configured to add service transaction data in the import and export service to the blockchain B. The blockchain A independent consensus network corresponding to the blockchain A and the blockchain B independent consensus network corresponding to the blockchain B may be collectively referred to as independent consensus networks.

In one embodiment, if the plurality of blockchains in the core consensus network include a main chain (for example, the blockchain 10t) and a plurality of branch chains respectively corresponding to a plurality of transaction services derived from the main chain, the blockchain 10t (the main chain) may include registration information of a branch chain corresponding to each transaction service, and the registration information of the branch chain corresponding to each transaction service may include a blockchain identifier of the branch chain, service configuration information of the transaction service, a derivation condition corresponding to the blockchain identifier, and the like. The service configuration information of the transaction service (for example, the bill service) may include basic information of the transaction service (namely, descriptions of the bill service) and node configuration information (service node configuration information and consensus node configuration information). The service node configuration information may include a service node configured to perform the transaction service (for example, the bill service), that is, the service nodes included in the service node configuration information may form a branch chain independent service network. The consensus node configuration information may include consensus nodes configured to participate in performing an independent consensus on the branch chain. To be specific, the consensus nodes included in the consensus node configuration information all have consensus permission on the branch chain, and can form a branch chain independent consensus network. A derivation condition corresponding to each branch chain may be used to determine, on the blockchain 10t (the main chain), a genesis block of a corresponding branch chain, and each branch chain is obtained according to the derivation condition on the main chain. One branch chain corresponds to one transaction service, and one branch chain corresponds to one blockchain identifier. In this way, different transaction services can be effectively distinguished, to maintain uniqueness of data stored on a single branch chain. A main chain independent service network corresponding to the main chain and a branch chain independent service network corresponding to each branch chain may be collectively referred to as independent service networks. The main chain independent consensus network and the branch chain independent consensus network may also be referred to as independent consensus networks.

In this embodiment of this application, both the plurality of blockchains independent of each other and the main chain and the branch chain corresponding to the main chain may be collectively referred to as blockchains. All blockchains involved in this embodiment of this application may be consortium blockchains. In a multi-layer structure of the blockchain network, each blockchain may have a corresponding independent consensus network and a corresponding independent service network. The independent consensus network may be formed by some or all of the consensus nodes in the core consensus network shown in FIG. 1, and the blockchain independent service network may be formed by some or all of the service nodes in the service network shown in FIG. 1. Different blockchains may interact and communicate with each other through the cross-chain technology based on the MMR, and blockchain independent service networks corresponding to different blockchains cannot directly interact with each other.

For ease of understanding, further, FIG. 2 is a schematic diagram of a multi-chain structure of a blockchain network according to an embodiment of this application. As shown in FIG. 2, in this embodiment of this application, the multi-chain structure of the blockchain network is described by using an electronic bill multi-chain network as an example. A complete blockchain service system corresponding to the multi-chain structure of the blockchain network may include service network participants (which may be considered as service nodes in a service network), an electronic bill multi-chain network, and consortium blockchain internal participants (which may be considered as consensus nodes in a core consensus network). The service network participants may include, but are not limited to, a personal user, an enterprise user, a local bill SPV node 1 (a local bill lightweight node 1), a local bill SPV node 2, an application X bill SPV node, a branch chain X bill SPV node, and the like. The electronic bill multi-chain network may include, but is not limited to, a management chain 20a, a bill chain 20b, an application contract chain 20c, a branch chain 20d derived from the application contract chain 20c, and the like. The consortium blockchain internal participants may include, but are not limited to, a management chain full SPV and a tax management agency corresponding to the management chain full SPV, a bill chain full SPV and an electronic bill data center corresponding to the bill chain full SPV, an application contract chain full SPV node and a political cooperation agency and a service association agency that correspond to the application contract chain full SPV node, and the like. The local bill lightweight node 1 refers to a specific region in taxation, such as a province or a county. X refers to a specific object. For example, the application X bill SPV node may refer to a bill SPV node of a specific application, and the branch chain X bill SPV node may refer to a bill SPV node of a specific branch chain.

Different blockchains may correspond to different service network participants and different consortium blockchain internal participants. As shown in FIG. 2, service network participants corresponding to the management chain 20a may include the personal user, the enterprise user, and the like. The personal user and the enterprise user may obtain, through an entry of the tax management agency, block header data and some authorized and visible block data (for example, a service transaction associated with the personal user and the enterprise user) in the management chain 20a. A consortium blockchain internal participant corresponding to the management chain 20a may include the tax management agency, and the tax management agency, serving as the management chain full SPV, may have complete block data in the management chain 20a. The consortium blockchain internal participant may be an agency of a political intranet.

Service network participants corresponding to the bill chain 20b may include a local bill SPV node 1, a local bill SPV node 2, an application X bill SPV node, a branch chain X bill SPV node, and the like. The local bill SPV node 1, the local bill SPV node 2, the application X bill SPV node, the branch chain X bill SPV node, and the like may all obtain block header data and some authorized and visible block data in the bill chain 20b through an entry of the electronic bill service. A consortium blockchain internal participant corresponding to the bill chain 20b may include the electronic bill data center, and the electronic bill data center, serving as a bill chain full SPV node, may have complete block data in the bill chain 20b.

Service network participants corresponding to the application contract chain 20c may include an application X bill SPV node, and the like. The application X bill SPV node may obtain block header data and some authorized and visible block data in the application contract chain 20c through an entry of a tax derivation service. Consortium blockchain internal participants corresponding to the application contract chain 20c may include the political cooperation agency, the service association agency, and the like. Both the political cooperation agency and the service association agency, serving as the application contract chain full SPV nodes, may have complete block data in the application contract chain 20c. The branch chain 20d is used as a service branch chain corresponding to a transaction service (any bill type in the electronic bill service, for example, an X bill type) derived from the application contract chain 20c. Service network participants corresponding to the branch chain 20d may include the application X bill SPV node and the branch chain X bill SPV node. The application X bill SPV node and the branch chain X bill SPV node may obtain block header data and some authorized and visible block data in the branch chain 20d through the entry of the tax derivation service. The branch chain 20d may have the same consortium blockchain internal participant as the application contract chain 20c. This is not limited in this embodiment of this application. The entry of the tax management agency, the entry of the electronic bill service, and the entry of the tax derivation service may all be considered as proxy nodes in the routing proxy network shown in FIG. 1.

As shown in FIG. 2, a global management information contract may be deployed on the management chain 20a. The global management information contract may be configured for managing full management information in a tax service. The management chain 20a may be mainly responsible for tax metadata management. Smart contracts such as a global information cross-chain contract, an electronic bill permission clearing contract, an electronic bill SPV permission contract, and an electronic bill service contract may be deployed on the bill chain 20b. Smart contracts such as a global information cross-chain contract, an application chain SPV permission contract, various types of tax application contracts, and a general data clearing contract may be deployed on the application contract chain 20c. Smart contracts such as a global information cross-chain contract, a branch chain SPV permission contract, a dedicated tax application contract, and a general data clearing contract may be deployed on a branch chain 20d of the application contract chain 20c.

The global information cross-chain contract may be responsible for cross-chain processing of complete data stored in a corresponding blockchain. The electronic bill SPV permission contract may be configured for managing reading permission that is of a service node corresponding to the bill chain 20b and that is on data stored in the bill chain 20b. The electronic bill permission clearing contract is configured for being responsible for synchronizing service transaction data stored in the bill chain 20b to a service node having the reading permission. The electronic bill service contract is configured for being responsible for processing the service transaction data (for example, electronic bill transaction data) submitted to the bill chain 20b. Each type of tax application contract and dedicated tax application contract may include a data clearing interface, and service transaction data stored in a corresponding blockchain may be synchronized, through the data clearing interface, to a service node having the reading permission. The general data clearing contract is configured for being responsible for synchronizing general data stored in the corresponding blockchain to a service node having the reading permission. The application chain SPV permission contract may be configured for managing the reading permission that is of a service node corresponding to the application contract chain 20c and that is on data stored in the application contract chain 20c. The branch chain SPV permission contract may be configured for managing the reading permission that is of the service node corresponding to the branch chain 20d and that is on data stored on the branch chain 20d.

A plurality of blockchains in the electronic bill multi-chain network may interact and communicate with each other through a cross-chain relay. The cross-chain relay may be understood as establishing a channel between two blockchains, and creating a specific data structure in the channel, so that the two blockchains may perform cross-chain data exchange through the data structure in the channel. The channel established between the two blockchains may be referred to as the cross-chain relay. In other words, different blockchains cannot directly interact and communicate with each other, but need to interact and communicate with each other through a cross-chain technology. An important link in the cross-chain technology is a verification process of the cross-chain message. To improve verification efficiency of the cross-chain message, an embodiment of this application provides a cross-chain technology based on a Merkle mountain range (MMR). In the cross-chain technology based on the MMR, a cross-chain message at a block height may be quickly verified depending on a verification capability of an MMR root. In addition, to ensure correctness of the MMR root information, a trusted execution environment (TEE) trusted oracle may be introduced to maintain and submit the MMR root information. In other words, in the cross-chain technology based on the MMR provided in this embodiment of this application, each blockchain can complete verification of the cross-chain message by storing only a part of the MMR root information, to reduce a data storage occupation amount, and improve the verification efficiency of the cross-chain message.

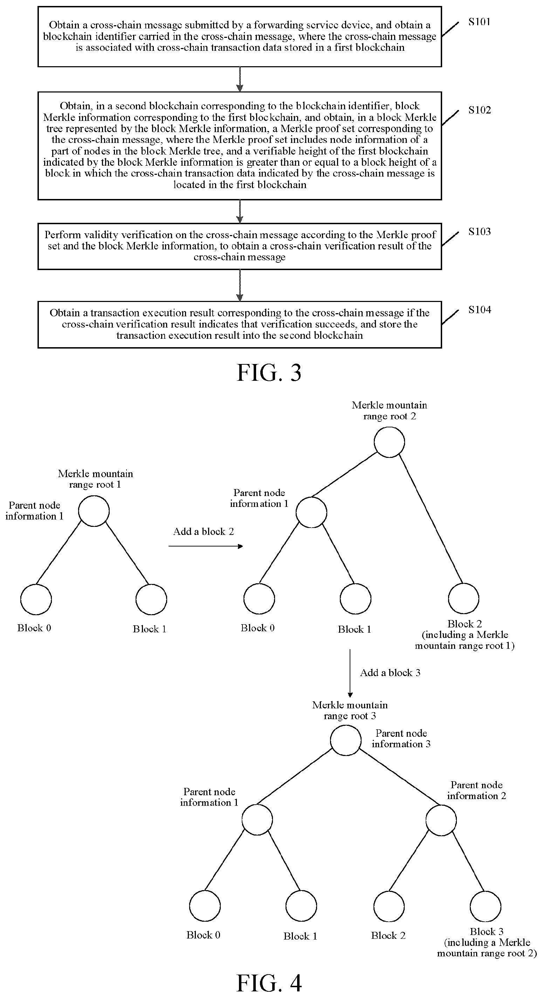

For a specific implementation process of the cross-chain technology based on the MMR provided in this embodiment of this application, refer to the following embodiments corresponding to FIG. 3 to FIG. 11.

FIG. 3 is a schematic flowchart of a blockchain-based data processing method according to an embodiment of this application. The blockchain-based data processing method may be applied to a cross-chain communication scenario between a first blockchain and a second blockchain. The blockchain-based data processing method herein may be performed by any consensus node on the second blockchain, and is specifically performed by a computer device maintaining any consensus node. As shown in FIG. 3, the blockchain-based data processing method may include at least the following operation S101 to operation S104.

Operation S101: Obtain a cross-chain message submitted by a forwarding service device, and obtain a blockchain identifier carried in the cross-chain message, where the cross-chain message is associated with cross-chain transaction data stored in a first blockchain.

The forwarding service device may be a device configured to perform cross-chain communication between the first blockchain and the second blockchain. The forwarding service device may be a device that actively or passively performs cross-chain communication between the first blockchain and the second blockchain. The forwarding service device may be a device other than the computer device maintaining the first blockchain and the second blockchain.

The blockchain identifier is an identifier configured for uniquely identifying a blockchain, and may be in a form of a character string. The blockchain identifier carried in the cross-chain message may be an identifier configured for identifying the second blockchain. That the cross-chain message is associated with the cross-chain transaction data stored in the first blockchain means that a cross-chain transaction indicated by the cross-chain message is associated with the cross-chain transaction data stored in the first blockchain.

The cross-chain message may be a message sent from the first blockchain to the second blockchain after a cross-chain transaction part processed by the first blockchain is completed. The message indicates a cross-chain transaction part to be processed by the second blockchain. In other words, the cross-chain message may be understood as a cross-chain transaction triggered by the first blockchain for the cross-chain transaction data.

In a multi-chain structure of a blockchain network (for example, the electronic bill multi-chain network in the embodiment corresponding to FIG. 2), interaction and communication between different blockchains may be maintained through a cross-chain technology. In this embodiment of this application, interaction between the first blockchain and the second blockchain is used as an example for description. The first blockchain and the second blockchain may cooperatively execute the same transaction, for example, a transaction such as asset hosting and authorization or a cross-chain transfer request. In this case, the first blockchain may be understood as a blockchain that triggers the cross-chain message, and the second blockchain may be understood as a blockchain that receives and executes the cross-chain message. A node (including the consensus node) in the first blockchain may perform cross-chain communication with a node (including the consensus node) in the second blockchain through the forwarding service device.

In one or more embodiments, a user may initiate a cross-chain transaction request to a cross-chain server end by using a resource client. The cross-chain transaction request specifies the cross-chain transaction data. A cross-chain server end submits the cross-chain transaction data to the first blockchain. After the cross-chain transaction data is successfully stored into the first blockchain, the cross-chain message for the cross-chain transaction data may be triggered by a cross-chain management contract deployed on the first blockchain.

The resource client used by the user may be configured to implement a resource management service function, and implement a communication connection to the cross-chain server end (a decentralized application) based on the resource management service function. The resource client is a tool responsible for managing and storing a user digital resource. For example, the digital resource may be transferred to another account based on the resource client. For another example, the digital resource transferred by another account may be received based on the resource client. The resource client may be a hardware device or a software program. In this embodiment of this application, a communication connection may be established between the resource client used by the user and the cross-chain server end, to implement related operations such as authorized login of the user. As various decentralized applications are widely deployed on a blockchain, activities of the user on the blockchain are increased. Generally, when using the decentralized application, the user may log in by using the resource client. A user address in the resource client corresponds to one user of the blockchain. The decentralized application can obtain the user address from the resource client through some interfaces, to resolve a problem that the decentralized application cannot trust the user address used during the login.

The cross-chain server end may refer to a service platform that interacts with a user who initiates a cross-chain service. The cross-chain server end may include a cross-chain service front end and a cross-chain service back end. The cross-chain service front end may include, but is not limited to, a web page, an application program, a subprogram (which, for example, may be referred to as a mini program) embedded in the application program, and the like. The cross-chain service back end may be a background service corresponding to the cross-chain service front end, such as a web page background service or an application program background service. The cross-chain service back end may be configured to provide data and a blockchain transaction function for the cross-chain service front end.

The cross-chain transaction data may refer to a transaction that is formed by encapsulation through a cross-chain transaction triggered by the user on the cross-chain server end by using the resource client. The cross-chain transaction data may be a transaction that is formed by encapsulation based on an asset hosting and authorization request, a transaction that is formed by encapsulation based on a cross-chain transfer request, or the like.

The cross-chain message may be a message sent from the first blockchain to the second blockchain after a cross-chain transaction part processed by the first blockchain is completed. The message indicates a cross-chain transaction part to be processed by the second blockchain. In other words, the cross-chain message may be understood as a cross-chain transaction triggered by the first blockchain for the cross-chain transaction data.

The cross-chain management contract may be pre-deployed in both the first blockchain and the second blockchain. The cross-chain management contract may be used as a submitting entry of the cross-chain transaction, to manage the cross-chain transaction received by the blockchain. The cross-chain management contract involved in this embodiment of this application may be specifically a cross-chain bridge contract. A cross-chain bridge may refer to a system for information transmission between two or more blockchains. In other words, information transmission may be implemented between two or more blockchains through the cross-chain bridge. The information herein may include, but is not limited to, a digital asset, a contract invocation, a certificate, a status, or the like. The certificate may be, for example, range Merkle proof, and the status may be a blockchain status or a status of a blockchain node.

In this embodiment of this application, the forwarding service device may detect a cross-chain management contract in each blockchain in real time or periodically. If the forwarding service device detects that the cross-chain management contract deployed on the first blockchain triggers the cross-chain message, the forwarding service device may obtain the cross-chain message from the cross-chain management contract deployed on the first blockchain, and submit the cross-chain message to the cross-chain management contract deployed on the second blockchain. The forwarding service device forwards the cross-chain message triggered by the cross-chain management contract in the first blockchain to the second blockchain on the premise that a block height H2 of a block in which the cross-chain message is located in the first blockchain is less than or equal to a corresponding verifiable height H1 of the first blockchain that is stored in the second blockchain. The forwarding service device may be configured to forward a cross-chain message between different blockchains, that is, the forwarding service device may be configured to provide a cross-chain message forwarding service. The forwarding service device does not need to ensure correctness of the cross-chain message, and only needs to submit the cross-chain message that is triggered by the first blockchain and that is detected by the forwarding service device to the second blockchain.

The consensus node on the second blockchain (namely, any consensus node having consensus permission on the first blockchain, for example, any consensus node in an independent consensus network corresponding to the second blockchain) may obtain, through the cross-chain management contract on the second blockchain, the cross-chain message submitted by the forwarding service device. The cross-chain message may include a blockchain identifier corresponding to a blockchain configured to receive the cross-chain message. The consensus node of the second blockchain may obtain the blockchain identifier carried in the cross-chain message. The blockchain corresponding to the blockchain identifier may be referred to as the second blockchain.

Operation S102: Obtain, in a second blockchain corresponding to the blockchain identifier, block Merkle information corresponding to the first blockchain, and obtain, in a block Merkle tree represented by the block Merkle information, a Merkle proof set corresponding to the cross-chain message, where the Merkle proof set includes node information of a part of nodes in the block Merkle tree, and a verifiable height of the first blockchain indicated by the block Merkle information is greater than or equal to a block height of a block in which the cross-chain transaction data indicated by the cross-chain message is located in the first blockchain.

The block Merkle information may be Merkle mountain range root (MMRR) information corresponding to a maximum block height in the first blockchain. The block Merkle tree may be an MMR tree including all blocks included in the first blockchain. In this case, each leaf node in the MMR tree is each block in the first blockchain or a hash value of each block in the first blockchain. Alternatively, the block Merkle tree may be an MMR tree including block headers of blocks included in the first blockchain. In this case, a leaf node in the MMR tree is a block header of each block in the first blockchain or may be specifically a hash value of each block in the first blockchain. This is not limited in this application.

A non-leaf node of the block Merkle tree is generated based on a child node of the non-leaf node. Further, the non-leaf node of the block Merkle tree may be generated based on a block represented by the child node of the non-leaf node, or may be generated based on a hash value of a block represented by the child node of the non-leaf node. Further, the non-leaf node may be a hash value obtained by concatenating the block represented by the child node of the non-leaf node and then performing a hash operation on the block represented by the child node of the non-leaf node. The block Merkle tree may be a binary tree.

The Merkle proof set (or may be referred to as an MMR proof set) may refer to node information of a part of nodes in the block Merkle tree that needs to be used by the second blockchain when the second blockchain verifies validity of the cross-chain message. In other words, when the validity of the cross-chain message is verified, node information of all nodes in the block Merkle tree does not need to be stored, and only the node information in the Merkle proof set needs to be stored. In this way, storage space can be saved, and a data storage occupation amount can be reduced.

The blocks are sequentially added to the blockchain in chronological order. The block height may represent a quantity of blocks in the block Merkle tree at a time point, namely, a quantity of blocks in the first blockchain, which may be the quantity, or may be positively correlated to the quantity. The verifiable height may be a maximum block height corresponding to block Merkle information stored in the second blockchain, or may be a maximum block height that is of the first blockchain and that is already known in the second blockchain.

In some or all embodiments, the block Merkle tree may be a binary tree. When a block is newly added to the first blockchain, and a consensus is reached on the newly added block in an independent consensus network corresponding to the first blockchain, the newly added block may be added to the first blockchain, an existing block Merkle tree corresponding to the first blockchain is used as a first Merkle subtree, and a new block Merkle tree corresponding to the first blockchain is constructed based on the first Merkle subtree and the newly added block, to obtain a Merkle mountain range root of the new block Merkle tree. A Merkle mountain range root of the existing block Merkle tree is recorded in the newly added block.

Further, in some or all embodiments, that the new block Merkle tree corresponding to the first blockchain is constructed based on the first Merkle subtree and the newly added block includes: if there is no leaf node located on the same layer on which the newly added block in the first Merkle subtree is located, using the newly added block as a second Merkle subtree, and generating parent node information of the first Merkle subtree and the second Merkle subtree, where the first Merkle subtree, the second Merkle subtree, and the parent node information of the first Merkle subtree and the second Merkle subtree form a new block Merkle tree corresponding to the first blockchain; and if there are leaf nodes that independently form a Merkle subtree in the first Merkle subtree, and brother nodes of the leaf nodes that independently form the Merkle subtree are a subtree root of another Merkle subtree, generating, based on the leaf nodes that independently form the Merkle subtree and the newly added block, the leaf nodes that independently form the Merkle subtree and first parent node information of the newly added block, and further generating second parent node information based on the first parent node information and a subtree root of the another Merkle subtree, to obtain a new block Merkle tree that is formed by the subtree root of the another Merkle subtree, the leaf nodes that independently form the Merkle subtree, the first parent node information, and the second parent node information and that corresponds to the first blockchain.

FIG. 4 is a schematic diagram of creating a block Merkle tree according to an embodiment of this application. The block Merkle tree in this embodiment of this application is an MMR tree. For example, a first blockchain includes three data blocks: a block 1, a block 2, and a block 3, where a block 0 is a genesis block. When the block 1 is generated in the first blockchain, and a consensus is reached on the block 1 in an independent consensus network corresponding to the first blockchain, the block 1 may be added to the first blockchain. In this case, the block 0 (the genesis block) and the block 1 may form the MMR tree. In this case, the MMR tree may include node information (including the block 0, the block 1, and parent node information 1 generated by the block 0 and the block 2) of nodes on two layers. In this case, an MMR root corresponding to the MMR tree may be recorded as a Merkle mountain range root 1 (which may be recorded as an MMRR 1).

Next, if the block 2 is newly added to the first blockchain, the block 2 may include the MMRR 1. Because there is no leaf node located on the same layer on which the block 2 in the MMR tree, the block 2 is located can be added to the MMR tree in a form of a Merkle subtree, and the block 0 and the block 1 form another Merkle subtree in the MMR tree. In this case, subtree roots (namely, the block 2 and the MMRR 1) of the two Merkle subtrees may be combined into a Merkle mountain range root 2 (which may be denoted as an MMRR 2).

Further, if the block 3 is continuously newly added to the first blockchain, the block 3 may include the MMRR 2. Because the MMR tree includes a block 2 located on the same layer on which the block 3 is located, parent node information 2 corresponding to the block 2 and the block 3 may be generated. The parent node information 2 and the parent node information 1 are located on the same layer. Therefore, parent node information 3 corresponding to the parent node information 1 and the parent node information 2 may be generated, to obtain an MMR tree corresponding to a maximum block height (where the maximum block height herein is 3). An MMR root corresponding to the MMR tree in this case may be denoted as a Merkle mountain range root 3 (which may be denoted as an MMRR 3).

It can be learnt from a construction process of the MMR tree shown in FIG. 4, when a new block is added to the first blockchain (which may refer to leaf node information in the MMR tree, and blocks in the first blockchain may all be used as the leaf node information in the MMR tree), intermediate node information (for example, the parent node information 1, the parent node information 2, and the parent node information 3) in the MMR tree does not change, and data is permanently added to the MMR tree in an additional form. Support of an additional data structure is not needed in a process of constructing the MMR tree, and only a previous MMR root needs to be added to each block. For example, the Merkle mountain range root 1 (the MMRR 1) is added to the block 2, the Merkle mountain range root 2 (the MMRR 2) is added to the block 3, and the rest is deduced by analogy. The MMRR 1, the MMRR 2, and the MMRR 3 in FIG. 4 are different root information. It seems that the MMRR 2 is replaced with the MMRR 1, and the MMRR 3 is replaced with the MMRR 2. This is not actually a replacement relationship, but a Merkle mountain range root corresponding to a time point at which the block 1 is added to the MMR tree is the MMRR 1, a Merkle mountain range root corresponding to a time point at which the block 2 is added to the MMR tree is the MMRR 2, and the like. In other words, the MMRR 1, the MMRR 2, and the MMRR 3 are Merkle mountain range roots of the MMR tree at different time points. Based on this feature of the MMR tree, one Merkle mountain range root (MMRR) can cover all nodes, and after each block is established, a Merkle mountain range root corresponding to the block does not need to be modified, as long as a field for storing a previous Merkle mountain range root is added to a block header of each block, to avoid generation of a hard branch or a soft branch.

In one embodiment, when an MMR tree corresponding to the first blockchain is constructed, block headers of all blocks included in the first blockchain may be used for construction, or full data of all blocks included in the first blockchain may be configured for construction. This is not limited in this application. Through a construction principle of the MMR, a consensus node of a second blockchain needs only a small amount of proof data (namely, node information in an MMR tree included in a Merkle proof set). That is, whether the block 3 and the block 0 are on the same blockchain may be verified, so that storage space can be saved.

Specifically, block Merkle information corresponding to the first blockchain may be obtained from a chain verification contract (where the chain verification contract herein may be specifically a first blockchain verification contract, and one blockchain may correspond to one chain verification contract) deployed on a second blockchain corresponding to a blockchain identifier; a first cross-chain transaction block to which the cross-chain transaction data indicated by the cross-chain message belongs is determined in the first blockchain, and block path information of the first cross-chain transaction block in the block Merkle tree represented by the block Merkle information is obtained; and subtree root information corresponding to a plurality of Merkle subtrees included in the block Merkle tree is obtained, and the subtree root information and node information included in the block path information are combined into the Merkle proof set corresponding to the cross-chain message.

In one embodiment, a process of obtaining the block path information may include: obtaining a block hash value corresponding to the first cross-chain transaction block, and determining, in the block Merkle tree represented by the block Merkle information, a Merkle subtree to which the block hash value belongs; and traversing layer node information in the Merkle subtree to which the block hash value belongs by using the block hash value as initial node information, until subtree root information in the Merkle subtree to which the block hash value belongs is traversed, and determining, according to the traversed layer node information, the block path information corresponding to the first cross-chain transaction block. In other words, searching may be performed on upper-layer parent node information in the block Merkle tree (MMR tree) starting from leaf node information (a block hash value) corresponding to the first cross-chain transaction block and ending in subtree root information (Merkle Tree Root, MTR) of the first cross-chain transaction block in a Merkle subtree to which the block Merkle tree belongs. A set of node information through which the searching passes may be referred to as the block path information corresponding to the first cross-chain transaction block.

In a multi-chain structure of a blockchain network, a verification contract of a plurality of blockchains may be deployed on each blockchain. For example, it is assumed that the multi-chain structure of the blockchain network includes four blockchains, which are respectively denoted as the first blockchain, the second blockchain, a third blockchain, and a fourth blockchain. A second blockchain verification contract, a third blockchain verification contract, and a fourth blockchain verification contract may be deployed on the first blockchain. A first blockchain verification contract, the third blockchain verification contract, and the fourth blockchain verification contract may be deployed on the second blockchain. The rest can be deduced by analogy. One chain verification contract deployed on one blockchain corresponds to one blockchain. Each chain verification contract may be configured for storing latest block Merkle information (MMR root information) on a corresponding blockchain, and updating a corresponding verifiable height H1.

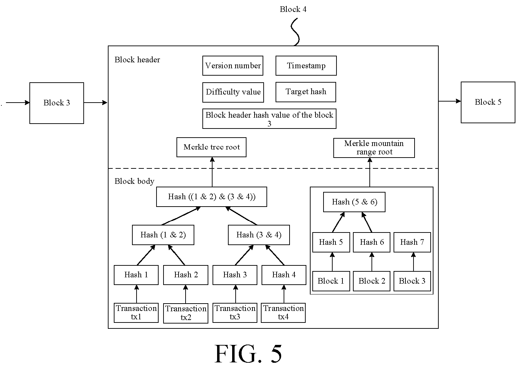

Further, FIG. 5 is a schematic diagram of a block structure according to an embodiment of this application. A blockchain shown in FIG. 5 may be a first blockchain (which may specifically include a genesis block, a block 1, a block 2, a block 3, a block 4, and a block 5), and the block 4 shown in FIG. 5 may be a first cross-chain transaction block to which cross-chain transaction data belongs in the first blockchain. The block 4 may be formed by a block header and a block body. The block body may be configured for storing transaction data (including cross-chain transaction data) encapsulated into the block 4. The block header may include a version number, a timestamp, a difficulty value, a target hash, a block header hash value of a previous block (namely, a block header hash value of the block 3), a Merkl tree root (transaction Merkl information), and a Merkl mountain range root (block Merkl information).

The Merkle tree root in the block header may refer to root information corresponding to a Merkle tree obtained after a hash operation is performed on a plurality of pieces of transaction data (which specifically may be a transaction tx1, a transaction tx2, a transaction tx3, and a transaction tx4) stored in the block 4. A hash value corresponding to the transaction tx1 may be denoted as Hash 1, and a hash value corresponding to the transaction tx2 may be denoted as Hash 2. Hash values Hash (1 & 2) may be obtained by performing hash operations on Hash 1 and Hash 2, and hash values Hash (3 & 4) may be obtained by performing hash operations on Hash 3 and Hash 4. Hash values Hash ((1 & 2) & (3 & 4)) are obtained by performing hash operations on Hash (1 & 2) and Hash (3 & 4)), so that a Merkle tree corresponding to all transaction data stored in the block 4 can be constructed. The Merkle mountain range root in the block header may be an MMR tree obtained after hash operations are performed on three block headers before the block 4. That is, the Merkle mountain range root in the block header of the block 4 may be a Merkle mountain range root corresponding to the block 3. A hash value corresponding to a block header of the block 1 is denoted as Hash 5, a hash value corresponding to a block header of the block 2 is denoted as Hash 6, and a hash value corresponding to a block header of the block 3 is denoted as Hash 7. Hash values Hash (5 & 6) are obtained by performing hash operations on Hash 5 and Hash 6, and then the Merkle mountain range root in the block header may be obtained by combining Hash 7 and Hash (5 & 6).

Hash algorithms used in the hash operations in some or all embodiments of this application may include, but are not limited to, SHA-1, SHA-224, SHA-256, SHA-384, and SHA-512, which is not limited in this application.

Operation S103: Perform validity verification on the cross-chain message according to the Merkle proof set and the block Merkle information, to obtain a cross-chain verification result of the cross-chain message.

Specifically, in this embodiment of this application, validity of the cross-chain message may be quickly verified based on a verification capability of the block Merkle information (MMR root information) by invoking, through a cross-chain management contract in the second blockchain, a first blockchain verification contract in the second blockchain. For example, validity verification may be performed on the cross-chain message according to a Merkle proof set (for example, a Merkle mountain range proof set) and the block Merkle information (for example, the MMR root information), to obtain the cross-chain verification result of the cross-chain message.

A validity verification process of the cross-chain message may include verification of the first cross-chain transaction block to which the cross-chain transaction data indicated by the cross-chain message belongs and verification of the cross-chain transaction data. Verification of the first cross-chain transaction block is implemented based on the block Merkle information (the MMR root information) and a block Merkle tree (MMR tree) corresponding to the block Merkle information, and verification of the cross-chain transaction data is implemented based on the transaction Merkle information (a Merkle tree root in a block header of the first cross-chain transaction block) and a transaction Merkle tree (Merkle trees corresponding to all transaction data in a block body of the first cross-chain transaction block) corresponding to the transaction Merkle information.

If the cross-chain verification result indicates that verification succeeds, it indicates that the cross-chain message is stored in the first blockchain and the cross-chain message is complete and is not tampered with. If the cross-chain verification result indicates that verification fails, it indicates that the cross-chain message is not stored in the first blockchain or the cross-chain message is tampered with, error prompt information corresponding to the cross-chain message may be generated, and the error prompt information is transmitted to a forwarding service device through the cross-chain management contract in the second blockchain, to enable the forwarding service device to forward the error prompt information to a cross-chain management contract in the first blockchain, where the error prompt information is configured for indicating the first blockchain to retrigger the cross-chain message.

Operation S104: Obtain a transaction execution result corresponding to the cross-chain message if the cross-chain verification result indicates that verification succeeds, and store the transaction execution result into the second blockchain.

Specifically, if the cross-chain verification result indicates that verification succeeds, it indicates that the cross-chain transaction data that is included in the cross-chain message is stored in the first blockchain and the cross-chain message is complete and is not tampered with. Further, the cross-chain message (which actually may be the foregoing cross-chain transaction data) and other transaction data may be encapsulated into a second cross-chain transaction block. The second cross-chain transaction block may be broadcast in an independent consensus network corresponding to the second blockchain, so that all consensus nodes (namely, consensus nodes of the second blockchain) in the independent consensus network corresponding to the second blockchain may perform consensus processing on the second cross-chain transaction block. A structure of the second cross-chain transaction block may be shown in the block 4 in the embodiment corresponding to FIG. 5. Details are not described herein again.

At a consensus stage of the second cross-chain transaction block, consensus nodes that participate in performing consensus on the second cross-chain transaction block may obtain a transaction type corresponding to the cross-chain message, invoke, through the cross-chain management contract (for example, a cross-chain bridge contract) in the second blockchain, an asset processor contract matching the transaction type, and perform transaction execution processing on the cross-chain message according to the asset processor contract, to obtain a transaction execution result corresponding to the cross-chain message. The transaction execution result may be added to the second cross-chain transaction block. If a consensus is reached on the second cross-chain transaction block in the independent consensus network corresponding to the second blockchain, the second cross-chain transaction block may be stored into the second blockchain. A consensus algorithm used by the second cross-chain transaction block at the consensus stage may be any consensus mechanism in a current blockchain technology. A type of the consensus algorithm used in this embodiment of this application is not limited.

The cross-chain transaction data stored in the first blockchain and the cross-chain message stored in the second blockchain that are involved in this embodiment of this application are actually the same cross-chain transaction, but the cross-chain transaction needs to be cooperatively performed by the first blockchain and the second blockchain. That is, the cross-chain transaction is cooperatively performed by the first blockchain and the second blockchain. For example, the cross-chain transaction is a digital asset cross-chain transfer request. The digital asset cross-chain transfer request may be configured for indicating to transfer a specific amount of digital asset from an address on a first chain of a user S (an account address of the user S on the first blockchain) to an address on a second chain (an account address of the user S on the second blockchain). The user S may transmit the cross-chain transaction data to the first blockchain through a cross-chain server end by using a resource client of the user S. In this case, the cross-chain transaction data may be transaction data that is formed by encapsulation based on the digital asset cross-chain transfer request triggered by the user S in the cross-chain server end. The cross-chain transaction may be encapsulated into the first cross-chain transaction block. When the first cross-chain transaction block is successfully stored into the first blockchain, it indicates that a specific amount of digital asset has been deducted from the address on the first chain. In this case, the first blockchain may trigger the cross-chain message through the cross-chain management contract (the cross-chain bridge contract). In other words, the cross-chain transaction data stored into the first blockchain may be configured for indicating the digital asset of the specific amount to be deducted from the address on the first chain corresponding to the user S. The cross-chain message triggered by the first blockchain may be submitted by the forwarding service device to the cross-chain management contract in the second blockchain. In this case, the cross-chain message is actually the foregoing cross-chain transaction data. The cross-chain message and the transaction execution result that corresponds to the cross-chain message may be stored into the second blockchain. The cross-chain message stored into the second blockchain (which may also be considered as the cross-chain transaction data stored into the second blockchain) may be configured for indicating to add a specific amount of digital asset to the address on the second chain corresponding to the user S.

In this embodiment of this application, after obtaining the cross-chain message submitted by the forwarding service device, the consensus node on the second blockchain obtains, from a second blockchain corresponding to a blockchain identifier in the cross-chain message, block Merkle information corresponding to the first blockchain, and obtains, from a block Merkle tree represented by the block Merkle information, a Merkle proof set corresponding to the cross-chain message. In other words, in interaction and communication between the first blockchain and the second blockchain, only a part of data indicated by the Merkle proof set needs to be stored on the second blockchain, and full block header data on the first blockchain does not need to be stored, to reduce a data storage occupation amount, and save storage space. Further, a verification capability of the block Merkle information may be relied on, that is, validity verification is performed on the cross-chain message according to the block Merkle information and the Merkle proof set, so that a cross-chain message at a block height can be quickly verified, and verification efficiency of the cross-chain message can be improved.

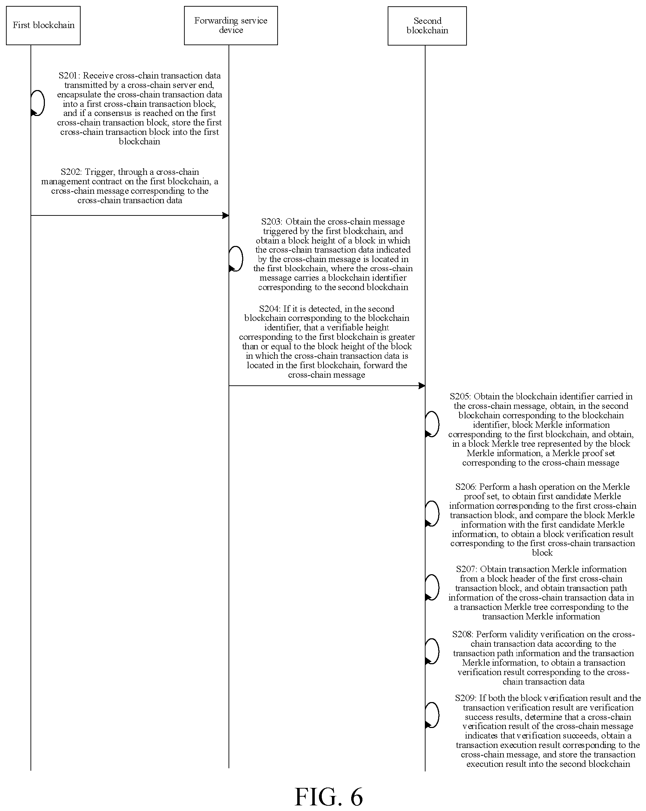

FIG. 6 is a schematic diagram of a time sequence of a blockchain-based data processing method according to an embodiment of this application. The blockchain-based data processing method may be interactively performed by a first blockchain (which may be understood as a consensus node of the first blockchain), a second blockchain (which may be understood as a consensus node of the second blockchain), and a forwarding service device. As shown in FIG. 6, the blockchain-based data processing method may include at least the following operation S201 to operation S209.

Operation S201: Receive cross-chain transaction data transmitted by a cross-chain server end, encapsulate the cross-chain transaction data into a first cross-chain transaction block, and if a consensus is reached on the first cross-chain transaction block, store the first cross-chain transaction block into a first blockchain.

In a multi-chain structure of a blockchain network, if a user S wants to process a cross-chain transaction in the multi-chain structure of the blockchain network, the user S may send cross-chain transaction data through a cross-chain server end by using a resource client of the user S, and the cross-chain server end submits the cross-chain transaction data to the first blockchain. A consensus node of the first blockchain may obtain the cross-chain transaction data transmitted by the cross-chain server end. Further, after the cross-chain transaction data is obtained, signature verification processing may be performed on a digital signature in the cross-chain transaction data. For example, validity verification may be performed on the digital signature in the cross-chain transaction data according to a user public key corresponding to the user S, to obtain a signature verification result corresponding to the cross-chain transaction data. If the signature verification result indicates that verification of the digital signature succeeds, the cross-chain transaction data is encapsulated into the first cross-chain transaction block. At a consensus stage of the first cross-chain transaction block, a transaction type corresponding to the cross-chain transaction data may be obtained. Further, an asset processor contract matching the transaction type may be invoked through a cross-chain management contract in the first blockchain to execute the cross-chain transaction data. If the signature verification result indicates that verification of the digital signature fails, the cross-chain transaction data may be marked as an invalid transaction, the cross-chain transaction data is discarded, and the cross-chain server end is notified to resubmit the cross-chain transaction data.

A process of verifying the digital signature in the cross-chain transaction data may include: decrypting the digital signature in the cross-chain transaction data by using the user public key corresponding to the user S, to obtain first digest information (a hash value) corresponding to the cross-chain transaction data; and performing a hash operation on the cross-chain transaction data by using a hash algorithm, to obtain second abstract information corresponding to the cross-chain transaction data. If the first digest information is the same as the second digest information, it indicates that the cross-chain transaction data is a valid transaction, that is, the signature verification result corresponding to the cross-chain transaction data indicates that verification succeeds. If the first digest information is different from the second digest information, it indicates that the cross-chain transaction data is an invalid transaction (where the cross-chain transaction data may be maliciously tampered in a transmission process), that is, the signature verification result corresponding to the cross-chain transaction data indicates that verification fails, and further, the cross-chain transaction data may be discarded. A hash algorithm used by the consensus node of the first blockchain may be a hash algorithm used when the user signs the cross-chain transaction data.

After receiving the cross-chain transaction data, the consensus node of the first blockchain needs to synchronize the cross-chain transaction data in an independent consensus network corresponding to the first blockchain, for example, broadcast the cross-chain transaction data to other consensus nodes in the independent consensus network corresponding to the first blockchain. The cross-chain transaction data may be lost in a transmitting process. To enable the cross-chain transaction data to reach, as much as possible, all consensus nodes in the independent consensus network corresponding to the first blockchain, the consensus node of the cross-chain transaction data is received through broadcast. One to more neighboring consensus nodes may be selected according to a network topology of the consensus node and a network traffic policy, to perform relay broadcasting, so as to provide a basis for packaging the cross-chain transaction data into the first cross-chain transaction block in a consensus process.

Further, the consensus node of the first blockchain may package transactions in a transaction pool, to generate the first cross-chain transaction block (assuming that the first cross-chain transaction block includes the cross-chain transaction data). In the consensus process of the first cross-chain transaction block, the consensus node may execute all the transactions in the first cross-chain transaction block. Certainly, the cross-chain transaction data included in the block is included. After a consensus is reached on the first cross-chain transaction block in the independent consensus network, the first cross-chain transaction block may be stored into the first blockchain.

Operation S202: Trigger, through the cross-chain management contract on the first blockchain, a cross-chain message corresponding to the cross-chain transaction data.

Specifically, when the first cross-chain transaction block is successfully stored into the first blockchain, the cross-chain message corresponding to the cross-chain transaction data may be triggered through the cross-chain management contract on the first blockchain. The cross-chain message may be submitted by the forwarding service device to the second blockchain.

Operation S203: Obtain a cross-chain message triggered by a first blockchain, and obtain a block height of a block in which cross-chain transaction data indicated by the cross-chain message is located in the first blockchain, where the cross-chain message carries a blockchain identifier corresponding to a second blockchain.

Specifically, the forwarding service device may obtain a contract state corresponding to the cross-chain management contract in the first blockchain, and if the contract state is a transaction to-be-forwarded state (where the transaction to-be-forwarded state is configured for indicating that a new cross-chain message is initiated in the cross-chain bridge contract on the first blockchain), obtain the cross-chain message triggered by the cross-chain management contract on the first blockchain; and determine the first cross-chain transaction block (namely, a block in which the cross-chain transaction data is stored in the first blockchain) to which the cross-chain transaction data indicated by the cross-chain message belongs in the first blockchain, and obtain a block height H2 of the first cross-chain transaction block in the first blockchain. That is, the block height of the first cross-chain transaction block in the first blockchain may be denoted as H2.

In a multi-chain architecture of a blockchain network, the forwarding service device may be configured to forward the cross-chain message between different blockchains. The forwarding service device may simultaneously detect a contract state of a cross-chain management contract on a plurality of blockchains, detect that the cross-chain message is initiated in the cross-chain management contract of any blockchain, and may forward the cross-chain message to a blockchain configured to receive the cross-chain message.

Operation S204: If it is detected, in the second blockchain corresponding to the blockchain identifier, that a verifiable height corresponding to the first blockchain is greater than or equal to the block height of the block in which the cross-chain transaction data is located in the first blockchain, forward the cross-chain message.

Specifically, after obtaining the cross-chain message from the cross-chain management contract of the first blockchain, and before forwarding the cross-chain message, the forwarding service device may determine, according to a blockchain identifier carried in the cross-chain message based on pre-stored correspondences between blockchain identifiers and blockchains, a blockchain (namely, the second blockchain) configured to receive the cross-chain message, and further may obtain, in a chain verification contract (which may be specifically a first blockchain verification contract) deployed on the second blockchain, the verifiable height H1 corresponding to the first blockchain. To be specific, a block height corresponding to block Merkle information (for example, MMR root information) stored in the first blockchain verification contract may be referred to as the verifiable height H1. If it is detected, in the second blockchain corresponding to the blockchain identifier, that the verifiable height H1 corresponding to the first blockchain is greater than or equal to the block height H2, the cross-chain message may be forwarded to the second blockchain.

In one embodiment, if the verifiable height H1 is less than the block height H2, height update prompt information corresponding to the first blockchain is generated, and the height update prompt information is transmitted to a trusted prediction device (which may be specifically, for example, a trusted MMR root oracle or a TEE trusted oracle), so that the trusted prediction device submits, according to the height update prompt information, block Merkle information corresponding to a maximum block height in the first blockchain to a chain verification contract (which may be specifically the first blockchain verification contract) on the second blockchain. The block Merkle information corresponding to the maximum block height is configured for covering the block Merkle information that has been stored in the chain verification contract deployed on the second blockchain and the verifiable height H1. If the updated verifiable height H1 is still less than the block height H2 of the cross-chain message in the first blockchain, the forwarding service device does not need to forward the cross-chain message, that is, submission of the cross-chain message fails.

Operation S205: Obtain the blockchain identifier carried in the cross-chain message, obtain, in a second blockchain corresponding to the blockchain identifier, the block Merkle information corresponding to the first blockchain, and obtain, in a block Merkle tree represented by the block Merkle information, a Merkle proof set corresponding to the cross-chain message.

The consensus node of the second blockchain may obtain, through the cross-chain management contract deployed on the second blockchain, the cross-chain message triggered by the cross-chain management contract on the first blockchain, further invoke, through the cross-chain management contract on the first blockchain, the first blockchain verification contract on the second blockchain, and perform validity verification on the cross-chain message through the block Merkle information (the MMR root information) on the first blockchain verification contract. For a specific implementation process of operation S205, refer to operation S101 and operation S102 in the foregoing embodiment corresponding to FIG. 3. Details are not described herein again.

Operation S206: Perform a hash operation on the Merkle proof set, to obtain first candidate Merkle information corresponding to the first cross-chain transaction block, and compare the block Merkle information with the first candidate Merkle information, to obtain a block verification result corresponding to the first cross-chain transaction block.

Specifically, the consensus node of the second blockchain may perform a hash operation on the Merkle proof set (which may be specifically an MMR proof set), to obtain first candidate Merkle information corresponding to the first cross-chain transaction block. In this case, the first candidate Merkle information may refer to block Merkle information obtained by performing the hash operation again through the Merkle proof set (that is, the MMR root information obtained through recalculation, and the first candidate Merkle information herein may be denoted as an MMRR'). If the block Merkle information (that is, the MMR root information stored in the first blockchain verification contract, which may be denoted as an MMRR) is consistent with (or identical to) the first candidate Merkle information, that is, MMRR'=MMRR, it is determined that the block verification result corresponding to the first cross-chain transaction block is a verification success result, which indicates that data in the first cross-chain transaction block is authentic and trusted and is not tampered with. If the block Merkle information is inconsistent with the first candidate Merkle information, that is, MMRR'≠MMRR, it is determined that the block verification result corresponding to the first cross-chain transaction block is a verification failure result. The hash operation is characterized by irreversibility, which indicates that data in the first cross-chain transaction block is maliciously tampered with. In this embodiment of this application, data stored in a leaf node (the first cross-chain transaction block) in an MMR tree (the block Merkle tree) may be verified, to ensure that the data is not tampered with and is authentic. The process herein may be referred to as an MMR proof process.

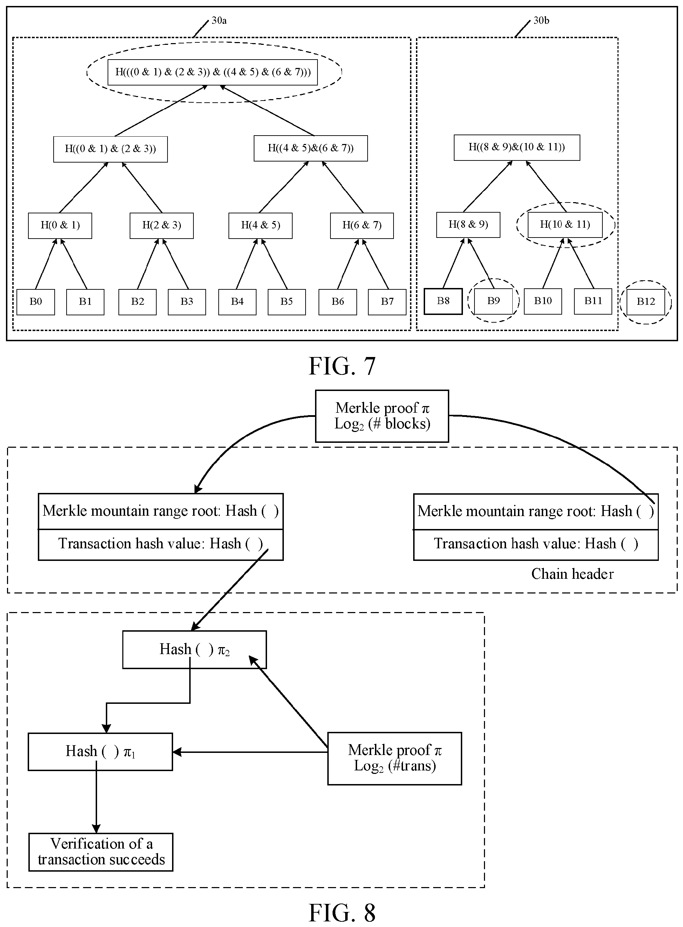

FIG. 7 is a schematic diagram of block data verification based on a Merkle mountain range according to an embodiment of this application. In this embodiment of this application, a leaf node B8 (the leaf node B8 herein may be considered as the foregoing first cross-chain transaction block) shown in FIG. 7 is used as an example to describe a Merkle mountain range root (MMR) proof process. An MMR tree shown in FIG. 7 may include three Merkle subtrees, which are respectively a Merkle subtree 30a (a perfect binary subtree), a Merkle subtree 30b (a perfect binary subtree), and a Merkle subtree including only a leaf node B12. A leaf node B0 to the leaf node B12 in the MMR tree may be represented as block headers of all blocks included in a first blockchain.

If it is expected to prove whether the leaf node B8 belongs to the MMR tree, a Merkle proof set of the leaf node B8 in the MMR tree may be obtained. The Merkle proof set may include hash values of a leaf node B9, the leaf node B12, an intermediate node Hash (10 & 11), and an intermediate node Hash (((0 & 1) & (2 & 3)) & ((4 & 5) & (6 & 7))) in the MMR tree. Hash ( ) represents obtaining a hash value. A proof process of the leaf node B8 may include:
(1) calculating a hash value H'(8) of the leaf node B8, where H'(8)=Hash (B8), and obtaining a hash value H(9) of the leaf node B9 and a hash value H(12) of the leaf node B12 in a Merkle mountain range path (the foregoing block path information), where H(9)=Hash (B9) and H(12)=Hash (B12);
② obtaining a right sub-root H(10 & 11) in the Merkle subtree 30b in which the leaf node B8 in the MMR tree is located, where H(10 & 11)=Hash (H(10) & H(11));
③ performing a hash operation on the hash value H'(8) of the leaf node B8 and the hash value H(9) of the leaf node B9, to obtain H'(8 & 9)=Hash (H'(8) & H(9));
④ performing a hash operation on H'(8 & 9) obtained through calculation in operation ③ and H(10 & 11) obtained in operation ②, to obtain H'(H'(8 & 9) & H(10 & 11)) and H'(H'(8 & 9) & H(10 & 11))=Hash (H'(8 & 9) & H(10 & 11));
⑤ obtaining a subtree root of the Merkle subtree 30a from the MMR tree shown in FIG. 7. In this case, the subtree root may be represented as H(((0 & 1) & (2 & 3)) & ((4 & 5) & (6 & 7)));
⑥ performing hash operations on H(12), H(((0 & 1) & (2 & 3)) & ((4 & 5) & (6 & 7))), and H'(H'(8 & 9) & H(10 & 11)), to obtain an MMRR' (first candidate Merkle information), where MMRR'=Hash (H(((0 & 1) & (2 & 3)) & ((4 & 5) & (6 & 7))) & H'(H'(8 & 9) & H(10 & 11)) & H(12)); and
⑦ comparing the MMRR' obtained through calculation with an MMRR (block Merkle information) stored in a first blockchain verification contract deployed on the second blockchain. If MMRR'=MMRR, it is proved that data of the leaf node B8 is not tampered with, that is, verification of the leaf node B8 succeeds.

H'(8), H'(8 & 9), and H'(H'(8 & 9) & H(10 & 11)) shown in FIG. 7 are all results obtained by performing hash operations again in a process of verifying the leaf node B8 by the first blockchain verification contract on the second blockchain. H(9), H(12), H(((0 & 1) & (2 & 3)) & ((4 & 5) & (6 & 7))) and the like shown in FIG. 7 are directly obtained node hash values in the MMR tree, and no hash operation needs to be performed. It can be learned that, the first blockchain verification contract in the second blockchain only needs to store H(9), H(12), H(10 & 11), and H(((0 & 1) & (2 & 3)) & ((4 & 5) & (6 & 7))), so that a process of verifying the data stored on the leaf node B8 can be implemented. This can save storage space of the first blockchain verification contract on the second blockchain, and reduce a data storage occupation amount.

Operation S207: Obtain transaction Merkle information from a block header of the first cross-chain transaction block, and obtain transaction path information of the cross-chain transaction data in a transaction Merkle tree corresponding to the transaction Merkle information.

Operation S208: Perform validity verification on the cross-chain transaction data according to the transaction path information and the transaction Merkle information, to obtain a transaction verification result corresponding to the cross-chain transaction data.

FIG. 8 is a schematic diagram of a verification process of a cross-chain message according to an embodiment of this application. As shown in FIG. 8, the verification process of the cross-chain message may include data authenticity verification in a first cross-chain transaction block (which may be referred to as block verification for short), and storage location verification of cross-chain transaction data indicated by the cross-chain message (which may be referred to as transaction verification for short). The data authenticity verification in the first cross-chain transaction block may be understood as verifying whether data stored in the first cross-chain transaction block is authentic and is not tampered with (which may be implemented by operation S205 and operation S206). Specifically, Merkle proof is performed in a form of log₂ (# block.), where the blocks herein refer to blocks in a first blockchain. The storage location verification of the cross-chain transaction data may be understood as verifying whether the cross-chain transaction data is stored in the first blockchain. Specifically, Merkle proof is performed in a form of log₂ (#trans.), where trans herein refers to transaction data stored in the first cross-chain transaction block. In this embodiment of this application, a process of verifying the cross-chain transaction data is described by using operation S207 and operation S208.

In some or all embodiments, operation S208 includes: performing a hash operation on the transaction path information, to obtain second candidate Merkle information corresponding to the cross-chain transaction data; and comparing the transaction Merkle information with the second candidate Merkle information, to obtain the transaction verification result corresponding to the cross-chain transaction data.

The transaction Merkle information (for example, the Merkle tree root in the block header of the block 4 in the embodiment corresponding to FIG. 5) may be obtained from a block header of the first cross-chain transaction block through a first blockchain verification contract on a second blockchain, and transaction path information of the cross-chain transaction data in a transaction Merkle tree (for example, the Merkle tree corresponding to the Merkle tree root in the block 4 shown in FIG. 5) corresponding to the transaction Merkle information may be obtained, for example, Merkle path information of the cross-chain transaction data in the Merkle tree. A hash operation is performed on the transaction path information, to obtain second candidate Merkle information (which may be a Merkle tree root obtained by performing a hash operation again) corresponding to the cross-chain transaction data. The second candidate Merkle information may be obtained by performing a plurality of hash operations based on node information (node hash values) of different layers included in the transaction path information. For example, a hash operation may be performed on node information of a same layer, and subsequent hash operations are performed on node information of a previous layer (for example, from π₁ to π₂), to finally obtain through calculation the second candidate Merkle information.

If the transaction Merkle information is consistent with the second candidate Merkle information, that is, the Merkle tree root in the block header of the first cross-chain transaction block is the same as a Merkle tree root obtained by performing a hash operation again by the second blockchain, it is determined that the transaction verification result corresponding to the cross-chain transaction data is a verification success result, which indicates that the cross-chain transaction data is stored in the first cross-chain transaction block of the first blockchain. If the transaction Merkle information is inconsistent with the second candidate Merkle information, it is determined that the transaction verification result corresponding to the cross-chain transaction data is a verification failure result, which indicates that the cross-chain transaction data is not stored in the first blockchain.

If both the block verification result and the transaction verification result are verification success results, it indicates that verification of the cross-chain message succeeds (the transaction verification succeeds). To be specific, the cross-chain transaction data indicated by the cross-chain message is stored in the first blockchain and the cross-chain transaction data is complete and is not tampered with. If either of the block verification result and the transaction verification result is a verification failure result, or both of the block verification result and the transaction verification result are verification failure results, it indicates that verification of the cross-chain message fails. To be specific, the cross-chain transaction data indicated by the cross-chain message is not stored in the first blockchain or the cross-chain transaction data is maliciously tampered with.

Operation S209: If both the block verification result and the transaction verification result are verification success results, determine that the cross-chain verification result of the cross-chain message indicates that verification succeeds, obtain a transaction execution result corresponding to the cross-chain message, and store the transaction execution result into the second blockchain.

For a specific implementation process of operation S209, refer to operation S104 in the foregoing embodiment corresponding to FIG. 3. Details are not described herein again.

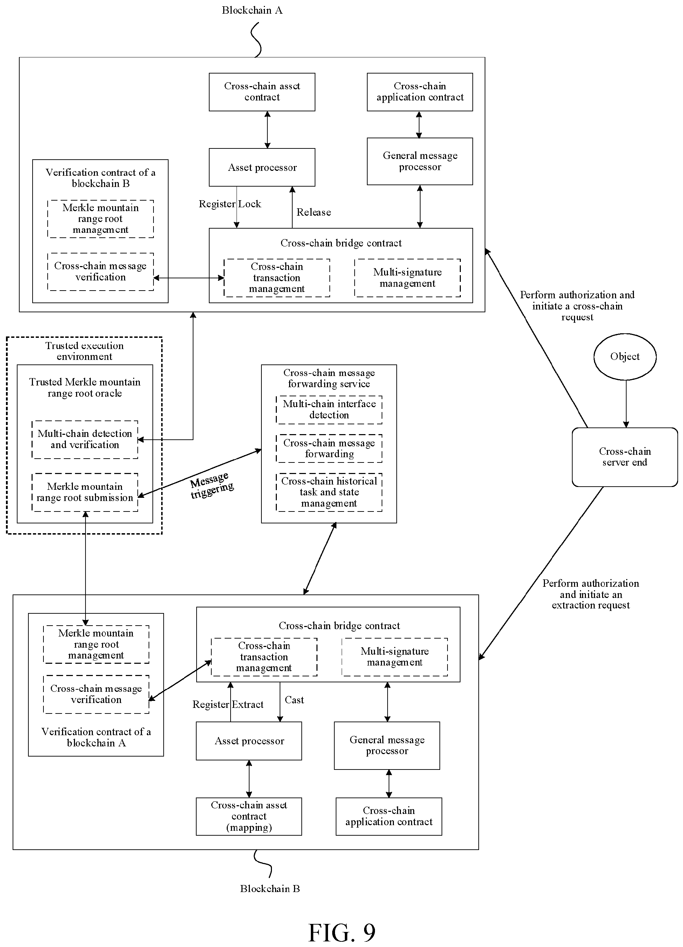

FIG. 9 is a schematic diagram of an overall structure of a cross-chain technology between different blockchains according to an embodiment of this application. As shown in FIG. 9, the overall structure of the cross-chain technology provided in this embodiment of this application may include, but is not limited to, a cross-chain server end, a cross-chain message forwarding service (a forwarding service device), a trusted Merkle mountain range root oracle (a trusted prediction device), and a plurality of blockchains (a blockchain A and a blockchain B shown in FIG. 9) configured to perform cross-chain communication.

The cross-chain server end may include a cross-chain service front end and a cross-chain service back end. The cross-chain service front end may include, but is not limited to, a form such as a web page, an application program, or a subprogram (for example, a mini program) embedded in the application program. The cross-chain service front end may be responsible for interacting with a user. The user may initiate a cross-chain request through the cross-chain service front end by using a resource client of the user. The cross-chain service front end may encapsulate the cross-chain request into cross-chain transaction data. The cross-chain request may include, but is not limited to, asset hosting and authorization, a cross-chain transfer request, and the like. After a cross-chain task is completed, a task completion status and related data of the cross-chain task may be displayed on the cross-chain service front end, that is, an extraction request may be initiated to a blockchain, to obtain a completion status of the cross-chain task and related data of the cross-chain task. The cross-chain service back end may serve the background, and is mainly configured to provide data and blockchain transaction function support for the cross-chain service front end. The cross-chain server end may be configured to perform identity registration on a plurality of blockchains, to obtain authorization of the plurality of blockchains, that is, obtain permission to submit the transaction data to the plurality of blockchains.

The cross-chain message forwarding service may include, but is not limited to, services such as a multi-chain interface detection service, a cross-chain message forwarding service, and a cross-chain historical task and state management service. The multi-chain interface detection service may be responsible for detecting a cross-chain message transmitted by a cross-chain bridge contract (a cross-chain management contract) on each blockchain. After the cross-chain message is detected through the multi-chain interface detection service, the cross-chain message may be checked through the cross-chain message forwarding service and forwarded to the cross-chain bridge contract on the blockchain on which the cross-chain message is executed (for ease of understanding, the blockchain on which the cross-chain message is transmitted may be referred to as an original chain, and the blockchain on which the cross-chain message is executed may be referred to as a target chain. For example, the foregoing first blockchain may be referred to as the original chain, and the second blockchain may be referred to as the target chain). The cross-chain historical task and state management service may be configured for managing a cross-chain task that has been forwarded by the cross-chain message forwarding service and a task state thereof. The cross-chain message is to be verified in a chain verification contract on the blockchain through an MMR technology. Therefore, the cross-chain message forwarding service does not need to ensure correctness of the cross-chain message forwarded by the cross-chain message forwarding service, and only needs to detect the cross-chain message on the original chain and submit the cross-chain message to the target chain. In other words, the cross-chain message forwarding service does not need to perform identity authentication on a plurality of blockchains, that is, trust for the cross-chain message forwarding service does not need to be set in a chain contract on the blockchain. Before forwarding the cross-chain message detected by the cross-chain message forwarding service, the cross-chain message forwarding service may obtain a block height H2 that is in the original chain and that is of a block to which the cross-chain message belongs, to further detect whether MMR root information that is greater than or equal to the block height H2 exists on the target chain. A block height of the MMR root information stored on the target chain may be referred to as a verifiable height, and is denoted as H1. If the verifiable height H1 is less than the block height H2, a trusted MMR root oracle service is triggered to submit MMR root information with a latest height (a maximum block height) to the target chain. If the verifiable height H1 on the target chain after submission is completed becomes greater than or equal to the block height H2, the cross-chain message forwarding service forwards the cross-chain message to the target chain. If the verifiable height H1 on the target chain is still less than the block height H2 after submission is completed, submission of the cross-chain message fails.

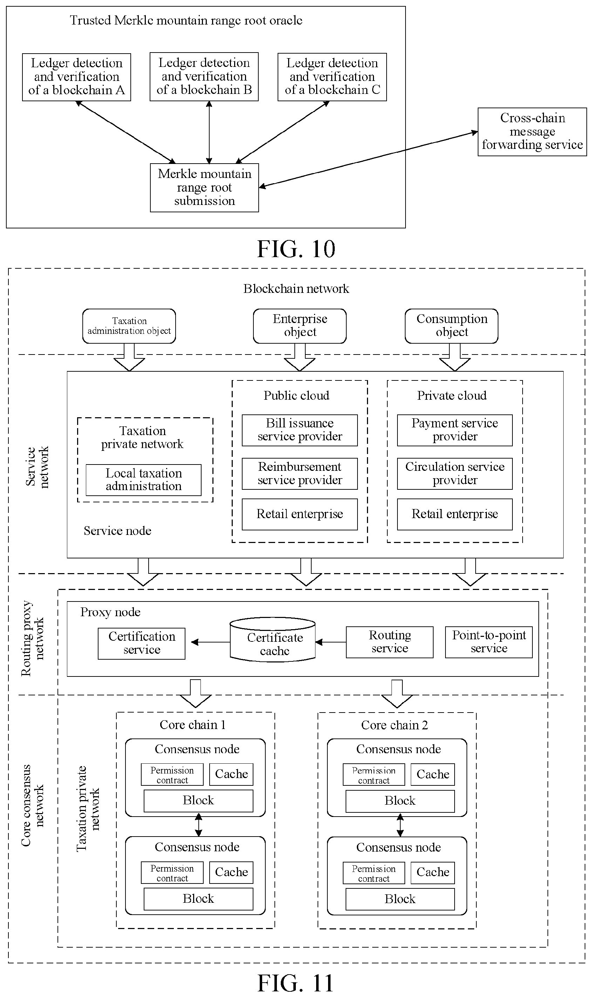

Trusted MMR root oracle: The trusted MMR root oracle may run in a trusted execution environment (TEE), and may also be referred to as a TEE trusted oracle. The trusted MMR root oracle may include, but is not limited to, services such as a multi-chain detection and verification service and an MMR root submission service. The multi-chain detection and verification service may be configured for detecting a ledger of each blockchain and verify a detected ledger. The MMR root submission service may submit, after receiving a trigger prompt of the cross-chain message forwarding service, MMR root information corresponding to a maximum block height on the original chain to the cross-chain bridge contract on the target chain. FIG. 10 is a schematic diagram of a structure of a trusted prediction device according to an embodiment of this application. As shown in FIG. 10, a multi-chain detection and verification service in a trusted MMR root oracle may include a plurality of detection and verification services. One blockchain corresponds to one detection and verification service run in a TEE. Each detection and verification service may detect a ledger on one blockchain, verify the detected ledger in a manner of performing verification by synchronizing each block to the local, and may store MMR root information of each block height. For example, the trusted MMR root oracle may include a ledger detection and verification service of a blockchain A (configured for detecting and verifying a ledger of the blockchain A), a ledger detection and verification service of a blockchain B (configured for detecting and verifying a ledger of the blockchain B), and a ledger detection and verification service of a blockchain C (configured for detecting and verifying a ledger of the blockchain C). The MMR root submission service may be connected to each detection and verification service. For example, the MMR root submission service may be connected to the ledger detection and verification service of the blockchain A, the ledger detection and verification service of the blockchain B, and the ledger detection and verification service of the blockchain C. When the cross-chain message forwarding service triggers the MMR root submission service to submit MMR root information of the blockchain A to the blockchain B, the MMR root submission service may obtain MMR root information corresponding to a latest height from the ledger detection and verification service of the blockchain A, and submit the MMR root information to a verification contract of the blockchain A on the blockchain B.

Cross-chain bridge contract: The cross-chain bridge contract is a submission entry of a cross-chain transaction (the cross-chain message), and the cross-chain bridge contract may include, but is not limited to, the following functions.
① Manage a cross-chain relay: Manage adding, deletion, change, or query of a relay object to which the cross-chain message can be forwarded. Submission of the cross-chain message by the managed relay object (for example, the forwarding service device) herein is forwarding only, and does not include an acknowledgement on the cross-chain message.
② Manage a cross-chain transaction: The cross-chain bridge contract on the original chain may record submission information of each cross-chain transaction (the cross-chain message), and the cross-chain bridge contract on the target chain may record an execution status of each cross-chain transaction after the cross-chain transaction is submitted and a corresponding state change (for example, state changes such as inactive-activated-passed-executed-cancelled). For example, when the cross-chain transaction is a cross-chain transfer message, the cross-chain bridge contract on the original chain may record information such as a user submitting the cross-chain transfer, a data transfer amount, a digital asset type, a blockchain identifier (ID) of the target chain, a user address in the target chain that is configured for receiving the digital asset, and a transaction sequence number. If the cross-chain bridge contract in the target chain receives the cross-chain message from the blockchain A that is submitted by the forwarding service device, a verification contract of the blockchain A may be invoked through a cross-chain management contract, and whether the cross-chain message from the blockchain A is stored in the blockchain A and the cross-chain message is complete and is not tampered with is determined based on an MMR verification technology in the verification contract of the blockchain A.
③ After the cross-chain message is completed, the cross-chain bridge contract may be responsible for invoking message processors corresponding to various cross-chain transaction types. For example, a cross-chain transaction of a token type is submitted to an asset processor contract. Further, the asset processor contract may execute the cross-chain transaction. Specifically, an asset contract in which a digital asset corresponding to the cross-chain transaction is located may be operated to complete cross-chain execution.

Chain verification contract: a verification contract of the blockchain B on the blockchain A shown in FIG. 9, and the verification contract of the blockchain A on the blockchain B. One blockchain may include a plurality of chain verification contracts, and one chain verification contract corresponds to one blockchain. The chain verification contract may include, but is not limited to, the following functions.
① The chain verification contract is configured for receiving latest MMR root information on each blockchain submitted by the MMR root submission service in the trusted MMR root oracle, and updating a corresponding verifiable height.
② The chain verification contract is configured for receiving the cross-chain message transmitted from the cross-chain bridge contract and performing verification. For each cross-chain message, the chain verification contract may obtain transaction information (cross-chain transaction data) corresponding to the cross-chain message, Merkle path information (transaction path information) of the cross-chain transaction data, block header information of a block (a first cross-chain transaction block) in which the cross-chain transaction data is located, and Merkle path information (block path information) of an MMR tree corresponding to a block header of a block in which the cross-chain transaction data is located. Based on the foregoing information and the MMR root information that has been stored in the chain verification contract, a correctness verification result (a cross-chain verification result) of the cross-chain message may be obtained through calculation by using a Merkle tree. For a verification principle of an MMR technology, refer to the descriptions in operation S205 to operation S208 in the embodiment corresponding to FIG. 6, and details are not described herein again. The cross-chain message is verified through the MMR technology, so that verification efficiency of the cross-chain message can be improved.

FIG. 11 is a system architecture diagram of a tax blockchain system according to an embodiment of this application. As shown in FIG. 11, a service network, a routing proxy network, and a core consensus network in embodiments of this application form an entire complete blockchain service system. There may be a plurality of blockchains maintained by the core consensus network. Specifically, the blockchains may be a core chain 1 and a core chain 2 shown in FIG. 11. The core chain 1 and the core chain 2 herein may be blockchains including full data. The core consensus network shown in FIG. 11 may include a plurality of independent consensus networks, and specifically, one independent consensus network may maintain one core chain. A consensus node in the independent consensus network may be configured to be responsible for performing consensus and recording service transaction data in a corresponding core chain. The service network shown in FIG. 11 may include a plurality of independent service networks, and specifically, one independent service network corresponds to one core chain. A service node in the independent service network is configured to be responsible for uploading transaction data for a tax service and data clearing (for example, transaction clearing) associated with the tax service. The transaction clearing means that after receiving a transaction synchronization request of the service node, the consensus node synchronizes transaction data that the service node has permission to read to the service node. In conclusion, one core chain may correspond to one independent consensus network and one independent service network, and different core chains may correspond to different independent consensus networks and independent service networks.

When the blockchain is used in some scenarios of a management agency (for example, a tax system) or a commercial agency, to improve data confidentiality and security, when related data such as personal privacy is involved in a blockchain system, a hierarchical blockchain structure "service network-core consensus network" in some or all embodiments of this application may be used. In other words, the hierarchical blockchain structure of "service network-core consensus network" may be formed between an independent consensus network and an independent service network that correspond to each core chain. The system architecture diagram may be applied to a plurality of transaction services associated with the tax service, such as an invoice service, an import and export service, a legal service, a credit service, and a refund service. One transaction service may correspond to one core chain. In this way, different transaction services can be effectively distinguished, to maintain uniqueness of storing related data of a single transaction service on a chain.

An entire tax service may involve a supervision organization, a billing party, a reimbursement party, a tax filing party, and the like. Therefore, the service node in the service network shown in FIG. 11 may be a service terminal device used by a service user, or may have a network connection relationship with a terminal device used by a service user. The service user herein may include a taxation agency user, an enterprise user, a consumer user, and the like. The taxation agency user may refer to a regulatory agency in a regulatory private network (for example, a computer device corresponding to provincial, municipal, and district taxation agencies). The enterprise user may be a bill issuance service provider, a reimbursement service provider, a retail enterprise (for example, a KA enterprise, namely, a large-scale retail customer and a key retail customer enterprise), or the like in a public cloud. The consumer user may be a payment service provider, a circulation service provider, a retail enterprise, or the like in a private cloud.

A proxy node in the routing proxy network may be configured to perform network isolation on the service network and the core consensus network. Both the independent consensus network and the independent service network that correspond to each core chain may perform network isolation through the proxy node in the routing proxy network. The proxy node in the routing proxy network may have a point-to-point service (namely, a P2P service), a routing service, a certificate cache, and a certification service. The routing service is a basic function of a blockchain node, and may be configured for communication between blockchain nodes, to perform network isolation on the service network and the core consensus network. The certificate cache is configured for caching a digital certificate of each blockchain node. The digital certificate is an identity certificate of an object having a public key in a public key certificate system (PKI). The public key certificate system (PKI) herein may include a public and private key password, an x509 certificate, a CA certificate issuing center, and the like. The certification service may be configured for performing identity verification on a service node in the service network, and the like.

In this embodiment of this application, the proxy node may be configured to forward service transaction data (which may be specifically cross-chain transaction data, and in this case, the service node configured to transmit the service transaction data may be a cross-chain server end) transmitted by the service node to a consensus node of the core chain 1 (in this case, the core chain 1 may be the foregoing first blockchain), so that the consensus node uploads the cross-chain transaction data. When the cross-chain transaction data is stored in the core chain 1, the cross-chain message may be triggered to a consensus node of the core chain 2 (in this case, the core chain 2 may be the foregoing second blockchain) by a cross-chain bridge contract deployed on the core chain 1. After detecting the cross-chain message triggered by the cross-chain bridge contract on the core chain 1, a forwarding service device may submit the cross-chain message to a cross-chain bridge contract deployed on the core chain 2. The consensus node of the core chain 2 obtains, through the cross-chain bridge contract, the cross-chain message transmitted by the consensus node of the core chain 1, and then may invoke a verification contract of the core chain 1 that is deployed on the core chain 2. According to an MMR root with a latest block height that is stored in the verification contract of the core chain 1, the consensus node of the core chain 2 determines whether the cross-chain transaction data indicated by the cross-chain message exists on the core chain 1 and the cross-chain message is complete and is not tampered with. After completing a verification process of the cross-chain message, the consensus node of the core chain 2 may invoke an asset processor contract corresponding to the cross-chain message, execute the cross-chain message through the asset processor contract, and store the cross-chain message and a transaction execution result of the cross-chain message into the core chain 2. The proxy node may be further configured to forward a transaction execution result (namely, an execution result of the cross-chain message) transmitted by the consensus node of the core chain 2 to the service node (for example, the cross-chain server end). This means that the proxy node may be configured to provide a communication service for the service node in the service network and the consensus node in the core consensus network. The forwarding service device may be configured to provide a cross-chain message forwarding service for different core chains.

As shown in FIG. 11, the consensus node (namely, an accounting node) in the core consensus network layer may be a trusted node in a taxation private network, and can determine its own consensus responsibility by invoking a permission contract (for example, a smart contract). The permission contract further stores flow logic for an entire lifecycle of an electronic bill, for example, a bill state of the electronic bill, a flowing procedure, an access permission of data, a claiming condition of the electronic bill, an issuance condition of the electronic bill, and a cross-chain transaction. For example, after receiving the service transaction data forwarded by the proxy node, the consensus node in the core consensus network may store the service transaction data into a cache (namely, a transaction pool corresponding to the consensus node in the core consensus network) shown in FIG. 11, and may further encapsulate the cached service transaction data into a new block. After a consensus is reached in the independent consensus network corresponding to the core chain 1, the new block may store the block into the core chain 1. That is, the foregoing service transaction data is successfully stored in the core chain 1. To implement interaction and communication between different core chains, a contract set may be deployed on each of a plurality of core chains in the core consensus network. The contract set may be a set of smart contracts associated with a plurality of cross-chain transactions deployed on each core chain, and may include, but is not limited to, a cross-chain bridge contract, an asset processor contract, each blockchain verification contract (for example, the verification contract of the core chain 1 and the verification contract of the core chain 2), a cross-chain application contract, a cross-chain asset contract, and the like. Certainly, a smart contract associated with another transaction (non-cross-chain transaction) may be further deployed on each core chain, such as an asset transfer contract or a data storage contract on the chain. Types of the smart contracts deployed on the core chains are not limited in this embodiment of this application.

The smart contract involved in some or all embodiments of this application may be a piece of service code. The smart contract may be run on a bottom layer of a blockchain. After the smart contract is successfully deployed on the blockchain, and when transaction data that needs to be configured for invoking the smart contract is subsequently obtained, consensus nodes participating in performing consensus in a blockchain network may execute the service code in the smart contract, and each consensus node may obtain the same result. In other words, the smart contract may be computer-readable instruction code. A developer may write the computer-readable instruction code by using a smart contract high-level language. A contract written in the high-level language may be compiled into byte code in a virtual machine of the blockchain node through a compiler. The virtual machine may be configured to interpret and execute the byte code in the smart contract. The smart contract high-level language may include, but is not limited to, Solidity (a smart contract programming language), Serpent (a smart contract programming language), and LLL (a smart contract programming language). For example, the developer may write a smart contract by using Solidity, compile the smart contract written by using Solidity into the virtual machine byte code by using the compiler, and then deploy the smart contract compiled into the virtual machine byte code on a blockchain. A user submitting the smart contract to the blockchain network may be any user that completes identity registration on a cross-chain server end (or another decentralized application).

In this embodiment of this application, after obtaining the cross-chain message submitted by the forwarding service device, the consensus node of the second blockchain obtains, from a second blockchain corresponding to a blockchain identifier in the cross-chain message, block Merkle information corresponding to the first blockchain, and obtains, from a block Merkle tree represented by the block Merkle information, a Merkle proof set corresponding to the cross-chain message. In other words, in interaction and communication between the first blockchain and the second blockchain, the second blockchain only needs to store a part of data indicated by the Merkle proof set, and does not need to store full block header data in the first blockchain, to reduce a data storage occupation amount, and save storage space. Further, a verification capability of the block Merkle information may be relied on, that is, validity verification is performed on the cross-chain message according to the block Merkle information and the Merkle proof set, so that a cross-chain message at a block height can be quickly verified, and verification efficiency of the cross-chain message can be improved.

In the specific implementation of this application, the cross-chain message may relate to personal information such as an account address, an asset, and the like of a user. When the foregoing embodiments of this application are applied to a specific product or technology, a permission or consent of the user is required, and collection, use, and processing of the related data need to comply with relevant laws, regulations, and standards of relevant countries and regions.

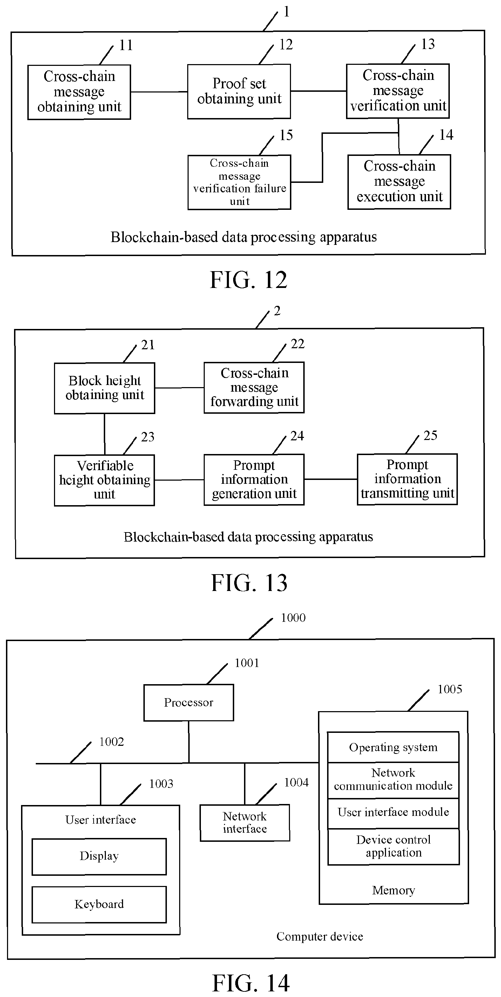

FIG. 12 is a schematic diagram 1 of a structure of a blockchain-based data processing apparatus according to an embodiment of this application. The blockchain-based data processing apparatus 1 may be applied to any consensus node on the foregoing second blockchain, for example, any consensus node in an independent consensus network corresponding to the second blockchain included in a core consensus network shown in FIG. 1. As shown in FIG. 12, the blockchain-based data processing apparatus 1 may include: a cross-chain message obtaining unit 11, a proof set obtaining unit 12, a cross-chain message verification unit 13, and a cross-chain message execution unit 14.

The cross-chain message obtaining unit 11 is configured to obtain a cross-chain message submitted by a forwarding service device, and obtain a blockchain identifier carried in the cross-chain message, the cross-chain message being associated with cross-chain transaction data stored in a first blockchain;
the proof set obtaining unit 12 is configured to obtain, in the second blockchain corresponding to the blockchain identifier, block Merkle information corresponding to the first blockchain, and obtain, in a block Merkle tree represented by the block Merkle information, a Merkle proof set corresponding to the cross-chain message, the Merkle proof set including node information of a part of nodes in the block Merkle tree, and a verifiable height the first blockchain indicated by the block Merkle information being greater than or equal to a block height of a block in which the cross-chain transaction data indicated by the cross-chain message is located in the first blockchain;
the cross-chain message verification unit 13 is configured to perform validity verification on the cross-chain message according to the Merkle proof set and the block Merkle information, to obtain a cross-chain verification result of the cross-chain message; and
the cross-chain message execution unit 14 is configured to obtain a transaction execution result corresponding to the cross-chain message if the cross-chain verification result indicates that verification succeeds, and store the transaction execution result into the second blockchain.

In one or more embodiments, the proof set obtaining unit 12 is further configured to obtain, in a chain verification contract deployed on the second blockchain corresponding to the blockchain identifier, the block Merkle information corresponding to the first blockchain; determine, in the first blockchain, a first cross-chain transaction block to which the cross-chain transaction data indicated by the cross-chain message belongs, and obtain block path information of the first cross-chain transaction block in the block Merkle tree represented by the block Merkle information; and obtain subtree root information corresponding to a plurality of Merkle subtrees included in the block Merkle tree, and combine the subtree root information and node information included in the block path information into the Merkle proof set corresponding to the cross-chain message.

In one or more embodiments, the proof set obtaining unit 12 is further configured to obtain a block hash value corresponding to the first cross-chain transaction block, and determine, in the block Merkle tree represented by the block Merkle information, a Merkle subtree to which the block hash value belongs; and traverse layer node information in the Merkle subtree to which the block hash value belongs by using the block hash value as initial node information, until subtree root information in the Merkle subtree to which the block hash value belongs is traversed, and determine, according to the traversed layer node information, the block path information corresponding to the first cross-chain transaction block.

In one or more embodiments, the cross-chain message verification unit 13 is further configured to perform a hash operation on the Merkle proof set, to obtain first candidate Merkle information corresponding to the first cross-chain transaction block, and compare the block Merkle information with the first candidate Merkle information, to obtain a block verification result corresponding to the first cross-chain transaction block; obtain transaction Merkle information from a block header of the first cross-chain transaction block, and obtain transaction path information of the cross-chain transaction data in a transaction Merkle tree corresponding to the transaction Merkle information, where the transaction Merkle tree is determined by transaction data included in the first cross-chain transaction block; perform validity verification on the cross-chain transaction data according to the transaction path information and the transaction Merkle information, to obtain a transaction verification result corresponding to the cross-chain transaction data; and if both the block verification result and the transaction verification result are verification success results, determine that the cross-chain verification result of the cross-chain message indicates that verification succeeds.

In one or more embodiments, the cross-chain message verification unit 13 is further configured to determine that the block verification result corresponding to the first cross-chain transaction block is the verification success result if the block Merkle information is consistent with the first candidate Merkle information.

In one or more embodiments, the cross-chain message verification unit 13 is further configured to determine that the block verification result corresponding to the first cross-chain transaction block is a verification failure result if the block Merkle information is inconsistent with the first candidate Merkle information.

In one or more embodiments, the cross-chain message verification unit 13 is further configured to perform a hash operation on the transaction path information, to obtain second candidate Merkle information corresponding to the cross-chain transaction data; and compare the transaction Merkle information with the second candidate Merkle information, to obtain the transaction verification result corresponding to the cross-chain transaction data.

In one or more embodiments, if the transaction Merkle information is consistent with the second candidate Merkle information, it is determined that the transaction verification result corresponding to the cross-chain transaction data is a verification success result; and if the transaction Merkle information is inconsistent with the second candidate Merkle information, it is determined that the transaction verification result corresponding to the cross-chain transaction data is a verification failure result.

In one or more embodiments, the cross-chain message execution unit 14 is further configured to: if the cross-chain verification result indicates that verification succeeds, encapsulate the cross-chain message into a second cross-chain transaction block, and obtain a transaction type corresponding to the cross-chain message at a consensus stage of the second cross-chain transaction block; invoke, through a cross-chain management contract in the second blockchain, an asset processor contract matching the transaction type, and perform transaction execution processing on the cross-chain message according to the asset processor contract, to obtain the transaction execution result corresponding to the cross-chain message; and add the transaction execution result to the second cross-chain transaction block, and store the second cross-chain transaction block into the second blockchain if a consensus is reached on the second cross-chain transaction block.

In one or more embodiments, the blockchain-based data processing apparatus 1 further includes: a cross-chain message verification failure unit 15, configured to generate error prompt information corresponding to the cross-chain message if the cross-chain verification result indicates that verification fails, and transmit the error prompt information to the forwarding service device through the cross-chain management contract in the second blockchain, to enable the forwarding service device to forward the error prompt information to a cross-chain management contract in the first blockchain, the error prompt information being configured for indicating the first blockchain to retrigger the cross-chain message.

According to an embodiment of this application, the operations involved in the blockchain-based data processing method shown above may be performed by the units in the blockchain-based data processing apparatus 1 shown in FIG. 12. For example, operation S101 shown in FIG. 3 may be performed by the cross-chain message obtaining unit 11 shown in FIG. 12, operation S102 shown in FIG. 3 may be executed by the proof set obtaining unit 12 shown in FIG. 12, operation S103 shown in FIG. 3 may be executed by the cross-chain message verification unit 13 shown in FIG. 12, operation S104 shown in FIG. 3 may be executed by the cross-chain message execution unit 14 shown in FIG. 12, and the like.

According to an embodiment of this application, the units in the blockchain-based data processing apparatus 1 shown in FIG. 12 may be separately or all combined into one or a plurality of units, or one (or more) of the units may be further split into at least two small subunits by function, which can implement the same operations without affecting the implementation of the technical effects of the embodiments of this application. The foregoing units are divided based on logical functions. In actual application, a function of one unit may also be implemented by at least two units, or functions of at least two units are implemented by one unit. In other embodiments of this application, the blockchain-based data processing apparatus 1 may also include another unit. During actual application, these functions may also be implemented with assistance of other units, and may be implemented with assistance of at least two units.

In this embodiment of this application, after obtaining the cross-chain message submitted by the forwarding service device, the consensus node of the second blockchain obtains, from a second blockchain corresponding to a blockchain identifier in the cross-chain message, block Merkle information corresponding to the first blockchain, and obtains, from a block Merkle tree represented by the block Merkle information, a Merkle proof set corresponding to the cross-chain message. In other words, in interaction and communication between the first blockchain and the second blockchain, the second blockchain only needs to store a part of data indicated by the Merkle proof set, and does not need to store full block header data in the first blockchain, to reduce a data storage occupation amount, and save storage space. Further, a verification capability of the block Merkle information may be relied on, that is, validity verification is performed on the cross-chain message according to the block Merkle information and the Merkle proof set, so that a cross-chain message at a block height can be quickly verified, and verification efficiency of the cross-chain message can be improved. In addition, to ensure correctness of the block Merkle information (the MMR root information), a TEE trusted oracle is introduced to maintain and submit the block Merkle information, to improve accuracy of the block Merkle information stored in the second blockchain.

FIG. 13 is a schematic diagram 2 of a structure of a blockchain-based data processing apparatus according to an embodiment of this application. The blockchain-based data processing apparatus 2 may be in a forwarding service device, for example, a cross-chain message forwarding service shown in FIG. 9. As shown in FIG. 13, the blockchain-based data processing apparatus 2 may include: a block height obtaining unit 21 and a cross-chain message forwarding unit 22.

The block height obtaining unit 21 is configured to obtain a cross-chain message triggered by a first blockchain, and obtain a block height of a block in which cross-chain transaction data indicated by the cross-chain message is located in the first blockchain, the cross-chain message carrying a blockchain identifier corresponding to a second blockchain; and
the cross-chain message forwarding unit 22 is configured to: if detecting, in the second blockchain corresponding to the blockchain identifier, that a verifiable height corresponding to the first blockchain is greater than or equal to the block height of the block in which the cross-chain transaction data is located in the first blockchain, forward the cross-chain message to a consensus node of the second blockchain, to enable the consensus node of the second blockchain to perform validity verification on the cross-chain message according to a Merkle proof set corresponding to the cross-chain message and block Merkle information indicating the verifiable height of the first blockchain, to obtain a cross-chain verification result of the cross-chain message,
the block Merkle information being stored in the second blockchain, the Merkle proof set being obtained in a block Merkle tree represented by the block Merkle information, and the consensus node of the second blockchain being configured to store, when the cross-chain verification result indicates that verification succeeds, a transaction execution result corresponding to the cross-chain message into the second blockchain.

In one or more embodiments, the block height obtaining unit 21 is further configured to obtain a contract state corresponding to a cross-chain management contract in the first blockchain, and if the contract state is a transaction to-be-forwarded state, obtain the cross-chain message triggered by the cross-chain management contract in the first blockchain; and determine, in the first blockchain, a first cross-chain transaction block to which the cross-chain transaction data indicated by the cross-chain message belongs, and obtain a block height of the first cross-chain transaction block in the first blockchain.

In one or more embodiments, the blockchain-based data processing apparatus 2 further includes: a verifiable height obtaining unit 23, a prompt information generation unit 24, and a prompt information transmitting unit 25.

The verifiable height obtaining unit 23 is configured to obtain, in a chain verification contract deployed on the second blockchain, the verifiable height corresponding to the first blockchain;
the prompt information generation unit 24 is configured to generate, if the verifiable height H1 is less than the block height of the block in which the cross-chain transaction data indicated by the cross-chain message is located in the first blockchain, height update prompt information corresponding to the first blockchain; and
the prompt information transmitting unit 25 is configured to transmit the height update prompt information to a trusted prediction device, to enable the trusted prediction device to submit, according to the height update prompt information, block Merkle information corresponding to a maximum block height in the first blockchain to the chain verification contract on the second blockchain,
the block Merkle information corresponding to the maximum block height being configured for covering the block Merkle information that has been stored in the chain verification contract deployed on the second blockchain and the verifiable height.

According to an embodiment of this application, the operations involved in the blockchain-based data processing method shown above may be performed by the units in the blockchain-based data processing apparatus 2 shown in FIG. 13. For example, the operation S203 shown in FIG. 6 may be performed by the block height obtaining unit 21 shown in FIG. 13, and the operation S204 shown in FIG. 6 may be performed by the cross-chain message forwarding unit 22 shown in FIG. 13.

According to an embodiment of this application, the units in the blockchain-based data processing apparatus 2 shown in FIG. 13 may be separately or all combined into one or a plurality of units, or one (or more) of the units may be further split into at least two small subunits by function, which can implement the same operations without affecting the implementation of the technical effects of the embodiments of this application. The foregoing units are divided based on logical functions. During actual application, a function of one unit may also be implemented by at least two units, or functions of at least two units are implemented by one unit. In other embodiments of this application, the blockchain-based data processing apparatus 2 may also include another unit. During actual application, these functions may also be implemented with assistance of other units, and may be implemented with assistance of at least two units.

In this embodiment of this application, the cross-chain message between the first blockchain and the second blockchain may be forwarded by the forwarding service device. The forwarding service device does not need to verify correctness of the cross-chain message, and only needs to detect, in real time, the cross-chain message triggered by the cross-chain management contract (the cross-chain bridge contract) on a plurality of blockchains, and directly forward the cross-chain message to a corresponding blockchain (for example, the second blockchain), to improve a transmission speed of the cross-chain message between different blockchains. In addition, the forwarding service device submits the cross-chain information only when there is block Merkle information (MMR root information) that is greater than or equal to the block height H2 at which the cross-chain message is located in the second blockchain, or otherwise, may trigger a trusted prediction device (a TEE trusted oracle) to submit latest MMR root information on the first blockchain to the second blockchain. In other words, in this embodiment of this application, to ensure correctness of the MMR root information, the TEE trusted oracle is introduced to maintain and submit the MMR root information, to improve accuracy of the MMR root information stored in the second blockchain.

FIG. 14 is a schematic diagram of a structure of a computer device according to an embodiment of this application. As shown in FIG. 14, the computer device 1000 may be a terminal device or may be a server. This is not limited herein. For ease of understanding, this application uses an example in which the computer device is the terminal device. The computer device 1000 may include: a processor 1001, a network interface 1004, and a memory 1005. In addition, the computer device 1000 may further include: a user interface 1003 and at least one communication bus 1002. The communication bus 1002 is configured to implement connection and communication between the components. The user interface 1003 may further include a standard wired interface and a standard wireless interface. In one embodiment, the network interface 1004 may include a standard wired interface and a standard wireless interface (such as a Wi-Fi interface). The memory 1005 may be a high-speed RAM, or may be a non-volatile memory, for example, at least one magnetic disk memory. In one embodiment, the memory 1005 may be at least one storage apparatus that is located far away from the foregoing processor 1001. As shown in FIG. 14, the memory 1005 used as a computer-readable storage medium may include an operating system, a network communication module, a user interface module, and a device-control application.

The network interface 1004 in the computer device 1000 may further provide a network communication function, and the user interface 1003 may further include a display and a keyboard. In the computer device 1000 shown in FIG. 14, the network interface 1004 may provide a network communication function; the user interface 1003 is mainly an interface configured for providing input for a user; and the processor 1001 may be configured to invoke the device control application program stored in the memory 1005, to implement:
obtaining a cross-chain message submitted by a forwarding service device, and obtaining a blockchain identifier carried in the cross-chain message, the cross-chain message being associated with cross-chain transaction data stored in a first blockchain;
obtaining, in a second blockchain corresponding to the blockchain identifier, block Merkle information corresponding to the first blockchain, and obtaining, in a block Merkle tree represented by the block Merkle information, a Merkle proof set corresponding to the cross-chain message, the Merkle proof set including node information of a part of nodes in the block Merkle tree, and a verifiable height of the first blockchain indicated by the block Merkle information being greater than or equal to a block height of a block in which the cross-chain transaction data indicated by the cross-chain message is located in the first blockchain;
performing validity verification on the cross-chain message according to the Merkle proof set and the block Merkle information, to obtain a cross-chain verification result of the cross-chain message; and
obtaining a transaction execution result corresponding to the cross-chain message if the cross-chain verification result indicates that verification succeeds, and storing the transaction execution result into the second blockchain.

Alternatively, the server 1001 may implement:
obtaining a cross-chain message triggered by a first blockchain, and obtaining a block height of a block in which cross-chain transaction data indicated by the cross-chain message is located in the first blockchain, the cross-chain message carrying a blockchain identifier corresponding to a second blockchain; and
if detecting, in the second blockchain corresponding to the blockchain identifier, that a verifiable height corresponding to the first blockchain is greater than or equal to the block height of the block in which the cross-chain transaction data is located in the first blockchain, forwarding the cross-chain message to a consensus node of the second blockchain, to enable the consensus node of the second blockchain to perform validity verification on the cross-chain message according to a Merkle proof set corresponding to the cross-chain message and block Merkle information indicating the verifiable height of the first blockchain, to obtain a cross-chain verification result of the cross-chain message,
the block Merkle information being stored in the second blockchain, the Merkle proof set being obtained in a block Merkle tree represented by the block Merkle information, and the consensus node of the second blockchain being configured to store, when the cross-chain verification result indicates that verification succeeds, a transaction execution result corresponding to the cross-chain message into the second blockchain.

The computer device 1000 described in this embodiment of this application may perform the descriptions of the blockchain-based data processing method in the foregoing embodiment corresponding to FIG. 3 or FIG. 6, or may perform the descriptions of the blockchain-based data processing apparatus 1 in the foregoing embodiment corresponding to FIG. 12, or may perform the descriptions of the blockchain-based data processing apparatus 2 in the foregoing embodiment corresponding to FIG. 13. Details are not described herein again. In addition, descriptions of beneficial effects of the same method are not described herein again.

In addition, an embodiment of this application further provides a computer-readable storage medium, where the computer-readable storage medium stores computer-readable instructions executed by the foregoing blockchain-based data processing apparatus 1 or the foregoing blockchain-based data processing apparatus 2, and the computer-readable instructions include program instructions. When a processor executes the program instructions, the descriptions of the blockchain-based data processing method in the foregoing embodiment corresponding to FIG. 3 or FIG. 6 can be executed. Therefore, details are not described herein again. In addition, descriptions of beneficial effects of the same method are not described herein again. For technical details that are not disclosed in the embodiments of the computer-readable storage medium in this application, refer to the method embodiments in this application. In an example, the program instructions may be deployed to be executed on a computer device, or deployed to be executed on a plurality of computer devices at the same location, or deployed to be executed on a plurality of computer devices that are distributed at a plurality of locations and interconnected by a communication network. A blockchain system may be composed of a plurality of computing devices distributed at a plurality of locations and interconnected by a communication network.

In addition, the embodiments of this application further provide a computer program product. The computer program product may include computer-readable instructions. The computer-readable instructions may be stored in a computer-readable storage medium. A processor of a computer device reads the computer-readable instructions from the computer-readable storage medium. The processor may execute the computer-readable instructions, to enable the computer device to perform the descriptions of the blockchain-based data processing method in the embodiment corresponding to FIG. 3 or FIG. 6. Therefore, details are not described herein again. In addition, descriptions of beneficial effects of the same method are not described herein again. For technical details that are not disclosed in the computer program product or the computer-readable instructions embodiments involved in this application, refer to the descriptions of the method embodiments in this application.

For ease of description, the foregoing method embodiments are stated as a series of action combinations. However, a person skilled in the art is to learn that this application is not limited to the described sequence of the actions because according to this application, some steps may be performed in another sequence or may be simultaneously performed. In addition, a person skilled in the art is also to learn that the embodiments described in this specification are all exemplary embodiments, and the involved actions and modules are not necessarily required to this application.

A sequence of the steps of the method in the embodiments of this application may be adjusted, and certain steps may also be combined or removed according to an actual requirement.

The modules in the apparatus in the embodiments of this application may be combined, divided, and deleted according to an actual requirement.

A person of ordinary skill in the art can understand that all or some of the processes of the methods in the foregoing embodiments may be implemented by computer-readable instructions instructing relevant hardware. The computer-readable instructions may be stored in a computer-readable storage medium. When the program is executed, the processes in the foregoing method embodiments may be included. The storage medium may be a magnetic disc, an optical disc, a read-only memory (ROM), or a random access memory (RAM).

The foregoing embodiments only describe several implementations of this application, which are described specifically and in detail, but cannot be construed as a limitation to the patent scope of the present invention. For a person of ordinary skill in the art, several transformations and improvements can be made without departing from the idea of this application. These transformations and improvements belong to the protection scope of this application. Therefore, the protection scope of the patent of this application shall be subject to the appended claims.

## Claims

1. A blockchain-based data processing method, executable by a computer device maintaining a consensus node on a second blockchain, **characterized by** comprising:
obtaining a cross-chain message submitted by a forwarding service device, and obtaining a blockchain identifier carried in the cross-chain message, the cross-chain message being associated with cross-chain transaction data stored in a first blockchain;
obtaining, in the second blockchain corresponding to the blockchain identifier, block Merkle information corresponding to the first blockchain, and obtaining, in a block Merkle tree represented by the block Merkle information, a Merkle proof set corresponding to the cross-chain message, the Merkle proof set comprising node information of a part of nodes in the block Merkle tree, and a verifiable height of the first blockchain indicated by the block Merkle information being greater than or equal to a block height of a block in which the cross-chain transaction data indicated by the cross-chain message is located in the first blockchain;
performing validity verification on the cross-chain message according to the Merkle proof set and the block Merkle information, to obtain a cross-chain verification result of the cross-chain message; and
obtaining a transaction execution result corresponding to the cross-chain message if the cross-chain verification result indicates that verification succeeds, and storing the transaction execution result into the second blockchain.

2. The method according to claim 1, wherein the obtaining, in the second blockchain corresponding to the blockchain identifier, block Merkle information corresponding to the first blockchain, and obtaining, in a block Merkle tree represented by the block Merkle information, a Merkle proof set corresponding to the cross-chain message comprises:
obtaining, in a chain verification contract deployed on the second blockchain corresponding to the blockchain identifier, the block Merkle information corresponding to the first blockchain;
determining, in the first blockchain, a first cross-chain transaction block to which the cross-chain transaction data indicated by the cross-chain message belongs, and obtaining block path information of the first cross-chain transaction block in the block Merkle tree represented by the block Merkle information; and
obtaining subtree root information corresponding to a plurality of Merkle subtrees comprised in the block Merkle tree, and combining the subtree root information and node information comprised in the block path information into the Merkle proof set corresponding to the cross-chain message.

3. The method according to claim 2, wherein the obtaining block path information of the first cross-chain transaction block in the block Merkle tree represented by the block Merkle information comprises:
obtaining a block hash value corresponding to the first cross-chain transaction block, and determining, in the block Merkle tree represented by the block Merkle information, a Merkle subtree to which the block hash value belongs; and
traversing layer node information in the Merkle subtree to which the block hash value belongs by using the block hash value as initial node information, until subtree root information in the Merkle subtree to which the block hash value belongs is traversed, and determining, according to the traversed layer node information, the block path information corresponding to the first cross-chain transaction block.

4. The method according to claim 2 or 3, wherein the performing validity verification on the cross-chain message according to the Merkle proof set and the block Merkle information, to obtain a cross-chain verification result of the cross-chain message comprises:
performing a hash operation on the Merkle proof set, to obtain first candidate Merkle information corresponding to the first cross-chain transaction block, and comparing the block Merkle information with the first candidate Merkle information, to obtain a block verification result corresponding to the first cross-chain transaction block;
obtaining transaction Merkle information from a block header of the first cross-chain transaction block, and obtaining transaction path information of the cross-chain transaction data in a transaction Merkle tree corresponding to the transaction Merkle information, wherein the transaction Merkle tree is determined by transaction data comprised in the first cross-chain transaction block;
performing validity verification on the cross-chain transaction data according to the transaction path information and the transaction Merkle information, to obtain a transaction verification result corresponding to the cross-chain transaction data; and
if both the block verification result and the transaction verification result are verification success results, determining that the cross-chain verification result of the cross-chain message indicates that verification succeeds.

5. The method according to claim 4, wherein the comparing the block Merkle information with the first candidate Merkle information, to obtain a block verification result corresponding to the first cross-chain transaction block comprises:
determining that the block verification result corresponding to the first cross-chain transaction block is the verification success result if the block Merkle information is identical to the first candidate Merkle information.

6. The method according to claim 5, wherein the comparing the block Merkle information with the first candidate Merkle information, to obtain a block verification result corresponding to the first cross-chain transaction block comprises:
determining that the block verification result corresponding to the first cross-chain transaction block is a verification failure result if the block Merkle information is inconsistent with the first candidate Merkle information.

7. The method according to any one of claims 4 to 6, wherein the performing validity verification on the cross-chain transaction data according to the transaction path information and the transaction Merkle information, to obtain a transaction verification result corresponding to the cross-chain transaction data comprises:
performing a hash operation on the transaction path information, to obtain second candidate Merkle information corresponding to the cross-chain transaction data; and
comparing the transaction Merkle information with the second candidate Merkle information, to obtain the transaction verification result corresponding to the cross-chain transaction data.

8. The method according to any one of claims 1 to 7, wherein the obtaining a transaction execution result corresponding to the cross-chain message if the cross-chain verification result indicates that verification succeeds, and storing the transaction execution result into the second blockchain comprises:
if the cross-chain verification result indicates that verification succeeds, encapsulating the cross-chain message into a second cross-chain transaction block, and obtaining a transaction type corresponding to the cross-chain message at a consensus stage of the second cross-chain transaction block;
invoking, through a cross-chain management contract in the second blockchain, an asset processor contract matching the transaction type, and performing transaction execution processing on the cross-chain message according to the asset processor contract, to obtain the transaction execution result corresponding to the cross-chain message; and
adding the transaction execution result to the second cross-chain transaction block, and storing the second cross-chain transaction block into the second blockchain if a consensus is reached on the second cross-chain transaction block.

9. The method according to any one of claims 1 to 8, further comprising:
generating error prompt information corresponding to the cross-chain message if the cross-chain verification result indicates that verification fails, and transmitting the error prompt information to the forwarding service device through the cross-chain management contract in the second blockchain, to enable the forwarding service device to forward the error prompt information to a cross-chain management contract in the first blockchain, the error prompt information being configured for indicating the first blockchain to retrigger the cross-chain message.

10. A blockchain-based data processing method, performed by a forwarding service device, and comprising:
obtaining a cross-chain message triggered by a first blockchain, and obtaining a block height of a block in which cross-chain transaction data indicated by the cross-chain message is located in the first blockchain, the cross-chain message carrying a blockchain identifier corresponding to a second blockchain; and
if detecting, in the second blockchain corresponding to the blockchain identifier, that a verifiable height of the first blockchain is greater than or equal to the block height of the block in which the cross-chain transaction data is located in the first blockchain, forwarding the cross-chain message to a consensus node of the second blockchain, to enable the consensus node of the second blockchain to perform validity verification on the cross-chain message according to a Merkle proof set corresponding to the cross-chain message and block Merkle information indicating the verifiable height of the first blockchain, to obtain a cross-chain verification result of the cross-chain message,
the block Merkle information being stored in the second blockchain, the Merkle proof set being obtained in a block Merkle tree represented by the block Merkle information, and the consensus node of the second blockchain being configured to store, when the cross-chain verification result indicates that verification succeeds, a transaction execution result corresponding to the cross-chain message into the second blockchain.

11. The method according to claim 10, wherein the obtaining a cross-chain message triggered by a first blockchain, and obtaining a block height of a block in which cross-chain transaction data indicated by the cross-chain message is located in the first blockchain comprises:
obtaining a contract state corresponding to a cross-chain management contract in the first blockchain, and if the contract state is a transaction to-be-forwarded state, obtaining the cross-chain message triggered by the cross-chain management contract in the first blockchain; and
determining, in the first blockchain, a first cross-chain transaction block to which the cross-chain transaction data indicated by the cross-chain message belongs, and obtaining a block height of the first cross-chain transaction block in the first blockchain.

12. The method according to claim 10 or 11, further comprising:
obtaining, in a chain verification contract deployed on the second blockchain, the verifiable height corresponding to the first blockchain;
generating, if the verifiable height is less than the block height of the block in which the cross-chain transaction data is located in the first blockchain, height update prompt information corresponding to the first blockchain; and
transmitting the height update prompt information to a trusted prediction device, to enable the trusted prediction device to submit, according to the height update prompt information, block Merkle information corresponding to a maximum block height in the first blockchain to the chain verification contract on the second blockchain,
the block Merkle information corresponding to the maximum block height being configured for covering the block Merkle information that has been stored in the chain verification contract deployed on the second blockchain and the verifiable height.

13. A blockchain-based data processing apparatus, **characterized by** comprising:
a cross-chain message obtaining unit, configured to obtain a cross-chain message submitted by a forwarding service device, and obtain a blockchain identifier carried in the cross-chain message, the cross-chain message being associated with cross-chain transaction data stored in a first blockchain;
a proof set obtaining unit, configured to obtain, in the second blockchain corresponding to the blockchain identifier, block Merkle information corresponding to the first blockchain, and obtain, in a block Merkle tree represented by the block Merkle information, a Merkle proof set corresponding to the cross-chain message, the Merkle proof set comprising node information of a part of nodes in the block Merkle tree, and a verifiable height of the first blockchain indicated by the block Merkle information being greater than or equal to a block height of a block in which the cross-chain transaction data indicated by the cross-chain message is located in the first blockchain;
a cross-chain message verification unit, configured to perform validity verification on the cross-chain message according to the Merkle proof set and the block Merkle information, to obtain a cross-chain verification result of the cross-chain message; and
a cross-chain message execution unit, configured to obtain a transaction execution result corresponding to the cross-chain message if the cross-chain verification result indicates that verification succeeds, and store the transaction execution result into the second blockchain.

14. A blockchain-based data processing apparatus, **characterized by** comprising:
a block height obtaining unit, configured to obtain a cross-chain message triggered by a first blockchain, and obtain a block height H2 of a block in which cross-chain transaction data indicated by the cross-chain message is located in the first blockchain, the cross-chain message carrying a blockchain identifier corresponding to a second blockchain; and
a cross-chain message forwarding unit, configured to: if detecting, in the second blockchain corresponding to the blockchain identifier, that a verifiable height corresponding to the first blockchain is greater than or equal to the block height of the block in which the cross-chain transaction data is located in the first blockchain, forward the cross-chain message to a consensus node of the second blockchain, to enable the consensus node of the second blockchain to perform validity verification on the cross-chain message according to a Merkle proof set corresponding to the cross-chain message and block Merkle information indicating the verifiable height of the first blockchain, to obtain a cross-chain verification result of the cross-chain message,
the block Merkle information being stored in the second blockchain, the Merkle proof set being obtained in a block Merkle tree represented by the block Merkle information, and the consensus node of the second blockchain being configured to store, when the cross-chain verification result indicates that verification succeeds, a transaction execution result corresponding to the cross-chain message into the second blockchain.

15. A computer device, comprising a memory and a processor, the memory being configured to store computer-readable instructions, and the processor being configured to invoke the computer-readable instructions, to enable the computer device to perform the method according to any one of claims 1 to 12.

16. A computer-readable storage medium, the computer-readable storage medium having computer-readable instructions stored therein, and the computer-readable instructions being applicable to be loaded and executed by a processor, to enable the processor to perform the method according to any one of claims 1 to 12.

17. A computer program product, comprising computer-readable instructions, the computer-readable instructions, when executed by a processor, enabling the processor to implement the method according to any one of claims 1 to 12.
